# EUROPÄISCHE PATENTSCHRIFT

(11) **EP 4 585 114 B1**
(45) Veröffentlichungstag und Bekanntmachung des Hinweises auf die Patenterteilung: **13.05.2026**
(21) Anmeldenummer: 25150650.7
(22) Anmeldetag: 08.01.2025
(51) Int. Cl.: A47J 31/46

(54) **GETRÄNKEAUSGABEEINHEIT EINES GETRÄNKEBEREITERS, UND GETRÄNKEBEREITER**
BEVERAGE DISPENSING UNIT OF A BEVERAGE MAKER, AND BEVERAGE MAKER
UNITÉ DE DISTRIBUTION DE BOISSONS D'UN PRÉPARATEUR DE BOISSONS, ET PRÉPARATEUR DE BOISSONS

(30) Priorität: 12.01.2024 DE 102024200292
(43) Veröffentlichungstag der Anmeldung: 16.07.2025
(73) Patentinhaber: WMF GmbH, 73312 Geislingen/Steige (DE)
(72) Erfinder: OBERHANSL, Denis, 89537 Giengen (DE)
(74) Vertreter: Pfenning, Meinig & Partner mbB

(56) Entgegenhaltungen:
- DE-A1- 2 160 512
- US-A1- 2023 045 194
- US-B2- 9 271 604

## Beschreibung

Es wird eine Getränkeausgabeeinheit eines Getränkebereiters bereitgestellt, enthaltend ein erstes Ventil zur Steuerung einer Ausgabe eines Getränks, das zwei Anschlüsse, eine offene Schaltstellung und eine geschlossene Schaltstellung aufweist, eine erste Ventileingang-Fluidleitung mit einem Eingangsende, das mit einer ersten Fluidleitung eines Getränkebereiters verbindbar ist oder verbunden ist, und einem Ausgangsende, das fluidisch mit einem ersten Anschluss des ersten Ventils verbunden ist, sowie eine erste Ventilausgang-Fluidleitung mit einem Eingangsende, das fluidisch mit einem zweiten Anschluss des ersten Ventils verbunden ist, und einem Ausgangsende, das zur Ausgabe von einem Getränk in eine äußere Umgebung der Getränkeausgabeeinheit geeignet ist, dadurch gekennzeichnet, dass die erste Ventilausgang-Fluidleitung eine Länge von ≤ 5 cm aufweist und einen Innendurchmesser im Bereich von > 0 bis ≤ 7 mm aufweist.

Eine Getränkeausgabeeinheit ist das zentrale Bauteil für eine Getränkeausgabe einer Kaffeemaschine. In diesem Bauteil führen bei modernen Kaffeemaschinen meist mehrere Fluidpfade zusammen, beispielsweise der eines frisch gebrühten Kaffees oder der eines Milchschaums. Weitere Fluidpfade sind möglich (für z.B. Sirup, Heißwasser, verschiedene Milchderivate, usw.).

In einer Fluidlaufrichtung betrachtet folgt unmittelbar nach der Getränkeausgabeeinheit eine Getränkeausgabe an einen meist darunter angeordneten Trinkbehälter. Erfolgt die Getränkeausgabe an lediglich einen einzigen Trinkbehälter, ist von einer Einzelausgabe die Rede. Dem gegenüber ist es möglich, die Getränkeausgabe gleichzeitig an zwei Trinkbehälter durchzuführen, wobei hierbei von einer Doppelausgabe die Rede ist. Daraus folgt, dass die Getränkeausgabeeinheit wenigstens zwei Auslassöffnungen eines gleichartigen Fluides (Kaffee, Milchschaum, Sirup, Weißwasser, usw.) aufweisen muss, um die Einzelausgabe als auch die Doppelausgabe durchführen zu können. Weiter ist es vorteilhaft, falls jeder Fluidpfad der Getränkeausgabeeinheit strömungsleitend mit einem Ablauf verbunden ist, der in einen Ausguss mündet. Dadurch werden beispielsweise Spülvorgänge für eine Reinigung der Fluidpfade möglich und/oder überschüssiges Fluid wird in den Ausguss ableitbar.

Allgemein weisen die im Stand der Technik bekannten Getränkebereiter einen Auslauf für die Getränkeausgabe an einen Trinkbehälter und einen Ablauf zu einem Ausguss auf, und sind mit diskreten Ventilen, wie z.B. 3/2- Wege Klappankerventile, ausgestattet.

DE 600 05 276 T2 offenbart einen Getränkebereiter, der eine Wasserversorgungseinheit, eine Wasseraufnahmeeinheit, Wasserkanäle zur Wasserversorgung und Kanäle zur Aufnahme von Wasser aufweist. Es ist ein Wasserverteiler vorhanden, der den Wasserdurchgang von der Wasserversorgungseinheit zu den Kanälen zur Aufnahme von Wasser selektiv zulässt, wobei der Wasserverteiler hierfür eine rotierende Platte aufweist, die von einem Elektromotor angetrieben wird und die eine Aussparung aufweist, die geeignet ist, über ein Rotieren der Platte in eine bestimmte Winkelposition ein Ausgangsende der Wasserkanäle zur Wasserversorgung mit einem Eingangsende der Kanäle zur Aufnahme von Wasser zu verbinden. Die rotierende Platte ist nicht in der Getränkeausgabeeinheit des Getränkebereiters angeordnet.

Die DE 10 2008 041122 A1 offenbart ein Keramikscheibenventil für die Verteilung von Heißwasser und/oder Wasserdampf in einem Heißgetrankeautomaten. Das Keramikscheibenventil weist ein Ventilgehäuse mit darin in einem Paket angeordneten Ventilscheiben auf, wovon mindestens eine Ventilscheibe eine verstellbare Steuerscheibe mit wenigstens einer Kanalbohrung ist, und wenigstens eine Ventilscheibe eine feststehende Ventilscheibe ist. Hierbei ist in einem Zulaufabschnitt und/oder in einem Ablaufabschnitt eine Verteilungsaussparung vorgesehen ist, die mehrere Eingangskanäle und/oder mehrere Ausgangskanäle miteinander verbindet. Das Keramikscheibenventil ist nicht in der Getränkeausgabeeinheit des Getränkebereiters angeordnet.

Allgemein ist gewünscht, ein Getränk wie z.B. einen Kaffee oder an ein Kaffeemischgetränk, durch einen Getränkebereiter bereitstellen zu lassen, das einen optimalen Geschmack, eine optimale Temperatur und ein perfektes optisches Erscheinungsbild aufweist. Dies ist nicht mit hoher Sicherheit möglich, wenn der Getränkebereiter nicht geeignet ist, ein Nachtropfen von einem gerade zubereiteten Getränk in den Getränkebehälter zu verhindern. In bekannten Getränkebereitern sind die Ventile relativ weit weg von der Getränkeausgabeeinheit platziert und somit kann ein Nachtropfen nicht auf sichere Art und Weise verhindert werden.

Es ist im Stand der Technik bekannt, diese Problematik dadurch zu reduzieren, indem die Ventile der Getränkebereiter nach Bereitstellung eines Getränks in eine Stellung geschaltet werden, welche den Getränkepfad mit einem Ablauf (engl. "drain") des Getränkebereiters verbindet. Es gelingt mit dieser Maßnahme jedoch nur bedingt, ein Nachtropfen auf zuverlässige Art und einzudämmen, da nicht mit hoher Sicherheit verhindert werden kann, dass Getränk, das sich in einer Leitung stromabwärts des Ventils befindet, nicht doch zum Auslass gelangt und für ein Nachtropfen sorgt. Dies kann die Qualität des über den Getränkebereiter bezogenen Getränks und auch eines nachfolgend über den Getränkebereiter bezogenen Getränks negativ beeinflussen, d.h. dessen Geschmack negativ beeinträchtigen (z.B. weniger frisch bzw. fader werden lassen), dessen optisches Erscheinungsbild verschlechtern (z.B. ein inkonsistentes Erscheinungsbild des Getränks zwischen einer Einzelausgabe und einer Doppelausgabe eines Getränks bewirken) sowie dessen Temperatur unerwünscht verändern (z.B. auf eine unerwünscht niedrige Temperatur reduzieren).

Die DE 11 2018 002 571 T5 offenbart eine Kaffeemaschine, in der eine weitere Lösung dieser Problematik vorgeschlagen wird. Diese Kaffeemaschine weist eine Kaffeedüse auf, deren distales Ende oberhalb einer Kaffeetasse angeordnet ist und deren proximales Ende eine Zwischenspeicherdüse aufweist, die geeignet ist, der Kaffeedüse Kaffee zuzuführen. Ferner weist eine Seitenfläche der Kaffeedüse einen seitlichen Abführungsabschnitt auf, der geeignet ist, einen Teil von Kaffee, dessen Flussgeschwindigkeit gegenüber einer herkömmlichen Flussgeschwindigkeit während der Zubereitung reduziert ist (beispielsweise am Ende der Zubereitung) von der Zwischenspeicherdüse direkt in einen Ablauf abzuführen (d.h. gar nicht erst der Kaffeedüse zuzuführen), wodurch ein Nachtropfen von Kaffee aus der Kaffeedüse reduziert werden. Ein entscheidender Nachteil hierbei ist jedoch, dass der Mechanismus der Abführung von der Flussgeschwindigkeit des zubereiteten Kaffees durch die Zwischenspeicherdüse abhängt und damit eine Gefahr besteht, dass zumindest ein Teil des Kaffees bereits vor dem Ende seiner Zubereitung fälschlicherweise in den Ablauf abgeleitet wird. Dadurch kann die Zubereitung unökonomisch werden und es kann nicht mit hoher Sicherheit eine optimale (d.h. gewünschte) Kaffeemenge bereitgestellt werden.

Die US 2023/045194 A1 offenbart einen kombinierten Heißwasserspender und Getränkebereiter, der einen Wassererhitzungsabschnitt und einen Wasserspeicherabschnitt umfasst, wobei der Wassererwärmungsabschnitt einen Kesselbehälter, ein Heizelement, einen ersten Wasserablassmechanismus und einen zweiten Ablassmechanismus einschließt und der Wasserspeicherabschnitt einen Kaltwasserbehälter und einen über dem Kesselbehälter angeordneten Warmwasserbehälter einschließt.

Die US 9 271 604 B2 offenbart einen Verteiler für ein Flüssigkeitsabgabesystem, das mindestens zwei Schichten umfasst, wobei die erste Schicht entlang ihrer Dickenrichtung mehrere Durchgangslöcher und senkrecht zur Dickenrichtung einen oder mehrere Flüssigkeitskanäle aufweist und die zweite Schicht entlang ihrer Dickenrichtung ein oder mehrere Durchgangslöcher, die jeweils mit einem der Durchgangslöcher der ersten Schicht in Verbindung stehen, und ebenfalls einen oder mehrere Flüssigkeitskanäle senkrecht zur Dickenrichtung aufweist.

Die DE 21 60 512 A1 offenbart ein Abgabeventil, insbesondere ein Abgabeventil zur wahlweisen Abgabe eines von fünf mit Sirup versetzten, carbonisierten Mischgetränken, von carbonisiertem Wasser allein und/ oder von nicht carbonisiertem Wasser allein.

Ausgehend hiervon war es die Aufgabe der vorliegenden Erfindung, eine Getränkeausgabeeinheit für einen Getränkebereiter sowie einen Getränkebereiter bereitzustellen, der mindestens einen der Nachteile aus dem Stand der Technik überwindet. Insbesondere sollte es mit der Getränkeausgabeeinheit und dem Getränkebereiter möglich sein, auf zuverlässige Art und Weise ein Nachtropfen von Getränk nach der Ausgabe des Getränks zu vermeiden und auf ökonomische Art und Weise ein Getränk bereitzustellen, das optimale Eigenschaften (d.h. einen gewünschten Geschmack, eine gewünschte Temperatur, ein gewünschtes Getränkevolumen und ein perfektes Erscheinungsbild) aufweist. Bevorzugt sollte es auch möglich sein, mit der Getränkeausgabeeinheit und dem Getränkebereiter ein Getränk auszugeben, das ein Erscheinungsbild aufweist, das sich nicht zwischen einer Einzelausgabe und einer Doppelausgabe des Getränks unterscheidet (z.B. eine identische Erscheinung in Bezug auf eine Milchschaum-Crema aufweist).

Die Aufgabe wird gelöst durch die Getränkeausgabeeinheit mit den Merkmalen von Anspruch 1 und die Kaffeemaschine mit den Merkmalen von Anspruch 14. In den abhängigen Ansprüchen sind bevorzugte Weiterbildungen der erfindungsgemäßen Gegenstände aufgeführt.

Erfindungsgemäß wird eine Getränkeausgabeeinheit eines Getränkebereiters bereitgestellt, enthaltend:
a) ein erstes Ventil (z.B. ein erstes Kaffeeventil) zur Steuerung einer Ausgabe eines Getränks (z.B. Kaffee), wobei das erste Ventil mindestens zwei Anschlüsse, eine offene Schaltstellung und eine geschlossene Schaltstellung aufweist,
b) eine erste Ventileingang-Fluidleitung mit einem Eingangsende, das mit einer ersten Fluidleitung eines Getränkebereiters verbindbar ist oder verbunden ist, und einem Ausgangsende, das fluidisch mit einem ersten Anschluss des ersten Ventils verbunden ist;
c) eine erste Ventilausgang-Fluidleitung mit einem Eingangsende, das fluidisch mit einem zweiten Anschluss des ersten Ventils verbunden ist, und einem Ausgangsende (d.h. einem Auslauf für Getränk), das zur Ausgabe von einem Getränk in eine äußere Umgebung der Getränkeausgabeeinheit geeignet ist;

dadurch gekennzeichnet, dass die erste Ventilausgang-Fluidleitung eine Länge von ≤ 5 cm und einen Innendurchmesser im Bereich von > 0 mm bis ≤ 7 mm aufweist,
wobei das erste Ventil mindestens drei Anschlüsse aufweist,
wobei die Getränkeausgabeeinheit ferner aufweist:
   i) ein zweites Ventil zur Steuerung einer Abgabe von Flüssigkeit in einen Ablauf, wobei das zweite Ventil mindestens zwei Anschlüsse, eine offene Schaltstellung und eine geschlossene Schaltstellung aufweist;
   ii) eine zweite Ventileingang-Fluidleitung mit einem Eingangsende, das fluidisch mit einem dritten Anschluss des ersten Ventils verbunden ist, und einem Ausgangsende, das fluidisch mit einem ersten Anschluss des zweiten Ventils verbunden ist; und
   iii) eine zweite Ventilausgang-Fluidleitung mit einem Eingangsende, das fluidisch mit dem zweiten Anschluss des zweiten Ventils verbunden ist, und einem Ausgangsende, das zur Abgabe von einem Getränk in einen Ablauf der Getränkeausgabeeinheit geeignet ist.

Weist die erste Ventilausgang-Fluidleitung keinen runden Querschnitt auf (sondern z.B. einen rechteckigen Querschnitt) bezieht sich die Angabe des Innendurchmesser auf die maximale Ausdehnung, die der Innenraum der ersten Ventilausgang-Fluidleitung in einer Raumrichtung aufweist, die sich entlang eines Querschnitts der ersten Ventilausgang-Fluidleitung erstreckt (d.h. auf dem Querschnitt liegt oder parallel zum Querschnitt ist). Dies kann auch für weitere Ventilausgang-Fluidleitungen, optional alle Ventilausgang-Fluidleitungen, gelten, welche die erfindungsgemäße Getränkeausgabeeinheit aufweist (siehe unten).

Mit der Getränkeausgabeeinheit ist es möglich, ein Nachtropfen von Getränk aus dem Ausgangsende der ersten Ventilausgang-Fluidleitung auf sehr zuverlässige Art und Weise zu vermeiden und auf ökonomische Art und Weise ein Getränk bereitstellen, das optimale Eigenschaften aufweist (d.h. einen gewünschten Geschmack, eine gewünschte Temperatur, ein gewünschtes Getränkevolumen und ein perfektes Erscheinungsbild).

Ein Grund hierfür ist, dass die Getränkeausgabeeinheit ein Ventil enthält, mit dem eine Ausgabe von einem Getränk geschaltet werden kann. Durch ein Schalten des Ventils in seine geschlossene Ventilstellung am Ende der Zubereitung des Getränks wird verhindert, dass weiteres Getränk der Ventileingang-Fluidleitung zur Fluidausgangs-Fluidleitung strömt, d.h. der Fluss an Getränk kann über eine Steuerung des Ventils unterbrochen werden. Ferner wirkt durch das Schalten des Ventils in die geschlossene Ventilstellung ein Unterdruck auf eine Flüssigkeitssäule, die sich noch im Innenvolumen der Ventilausgang-Fluidleitung befindet und ein Risiko reduziert, dass besagte Flüssigkeitssäule die Ventilausgang-Fluidleitung verlässt und ein Nachtropfen erzeugt. Damit kann ein Risiko eines Nachtropfens reduziert werden. Zudem kann durch das Schalten des Fluidpfads über das Ventil verhindert werden, dass während der Zubereitung ein Teil des Getränks versehentlich in den Ablauf (d.h. den "drain") gelangt, wodurch eine ökonomischere Bereitstellung eines Getränks erfolgen kann und besser sichergestellt werden kann, dass ein optimales (d.h. gewünschtes) Getränkevolumen bereitgestellt wird.

Ferner ist das Innenvolumen der Ventilausgang-Fluidleitung aufgrund ihrer Dimensionen (d.h. ihre Kürze und ihr kleiner Innendurchmesser) sehr gering, wodurch selbst dann nur ein geringes und kurzes Nachtropfen stattfinden kann, falls ein auf die Flüssigkeitssäule in der Ventilausgang-Fluidleitung zurückhaltender Unterdruck bei geschlossenem Ventil und eine zurückhaltende Kapillarwirkung aufgrund ihres geringen Innendurchmessers versagt. Insgesamt kann somit mit hoher Sicherheit ein Getränk mit optimalen Getränkeeigenschaften und einem geringen Risiko des Nachtropfens bereitgestellt werden.

Ein weiterer Vorteil ist, dass durch das geringe Innenvolumen der Ventilausgang-Fluidleitung warme und hygienische Spülungen bis zum Ausgangsende (d.h. bis zum Auslauf) der Getränkeausgabeeinheit mit geringer Menge an Reinigungsmittel möglich sind und ohne dass Flüssigkeit aus dem Auslauf austritt. Verschiedene Getränkesorten (z.B. Kaffeesorten und/oder Milchsorten) können nahezu ohne Kreuzkontamination ausgegeben werden. Ferner kann eine Getränketemperatur nach einem Warmspülen erhöht sein, d.h. eine optimale Getränketemperatur kann auch nach einem Warmspülen besser sichergestellt werden. Bei einer sporadischen Warmspülung sind ferner keine störenden Warnsignale mehr erforderlich. Zudem kann eine Verschmutzung im Auslaufbereich der Getränkeausgabeeinheit reduziert werden, da ein sporadisches Warmspülen bis zum Auslauf möglich ist. Ist unter der Getränkeausgabeeinheit eine Abtropfschale angeordnet, bleibt auch weniger bis kein Getränk (z.B. Kaffee und/oder Milchschaum) in der Abtropfschale stehen.

Ein zusätzlicher Vorteil ist, dass eine Wartung des ersten Ventils erleichtert ist, da der Auslauf aufgrund der kurzen Ventilausgang-Fluidleitung sehr gut von außen zugänglich ist, d.h. die Getränkeausgabeeinheit muss für den Zugang zum ersten Ventil nicht erst geöffnet werden.

Die erste Ventilausgang-Fluidleitung kann eine Länge von ≤ 4 cm, bevorzugt ≤ 3 cm, besonders bevorzugt ≤ 2 cm, insbesondere ≤ 1 cm, aufweisen. Ferner kann die erste Ventilausgang-Fluidleitung einen Innendurchmesser im Bereich von > 0 mm bis ≤ 6 mm, bevorzugt im Bereich von > 0 mm bis ≤ 5 mm, besonders bevorzugt im Bereich von > 0 mm bis ≤ 4 mm, ganz besonders bevorzugt im Bereich von > 0 mm bis ≤ 3 mm, insbesondere im Bereich von > 0 mm bis ≤ 2 mm, aufweisen. Je kürzer die Länge und je kleiner der Innendurchmesser, desto kleiner ist das Innenvolumen dieser Ventilausgang-Fluidleitung und desto stärker fallen die erfindungsgemäßen Vorteile aus.

Erfindungsgemäß weist das erste Ventil der Getränkeausgabeeinheit mindestens drei Anschlüsse auf, wobei die Getränkeausgabeeinheit ferner aufweist:
i) ein zweites Ventil (= Ablauf-Ventil bzw. "drain"-Ventil) zur Steuerung einer Abgabe von Flüssigkeit in einen Ablauf (bzw. "drain"), wobei das zweite Ventil mindestens zwei Anschlüsse, eine offene Schaltstellung und eine geschlossene Schaltstellung aufweist, wobei das zweite Ventil optional ein Rückschlagventil ist;
ii) eine zweite Ventileingang-Fluidleitung mit einem Eingangsende, das fluidisch mit einem dritten Anschluss des ersten Ventils verbunden ist, und einem Ausgangsende, das fluidisch mit einem ersten Anschluss des zweiten Ventils verbunden ist; und
iii) eine zweite Ventilausgang-Fluidleitung mit einem Eingangsende, das fluidisch mit dem zweiten Anschluss des zweiten Ventils verbunden ist, und einem Ausgangsende, das zur Abgabe von einem Getränk in einen Ablauf der Getränkeausgabeeinheit geeignet ist.

Durch das zweite Ventil (= Ablauf-Ventil) kann überschüssiges Getränk in den Ablauf ("drain") abgegeben werden. Ist beispielsweise das erste Ventil (z.B. ein erstes Kaffeeventil) geöffnet und das zweite Ventil (z.B. ein Ablauf-Ventil) geschlossen, wird ein Getränk aus dem Ausgangsende der ersten Ventilausgang-Fluidleitung des ersten Ventils (d.h. dem Auslauf des ersten Ventils) abgegeben. Ist der Fall andersherum, ein Getränk in den Ablauf ("drain") ausgegeben. Die Ventile können über einen gemeinsamen Aktor und einen Hebel, also reziprok/komplementär zueinander angetrieben werden, oder mittels zwei Aktoren unabhängig voneinander angetrieben werden. Das Ablaufventil kann auch als passives Rückschlagventil ausgeführt sein.

Hierbei ist das erste Ventil bevorzugt dergestalt konfiguriert, dass in einer geschlossenen Schaltstellung des ersten Ventils eine fluidleitende Verbindung zwischen dem ersten und dritten Anschluss des ersten Ventils besteht. Der Vorteil daran ist, dass ein Getränk bei einem geschlossenen ersten Ventil (d.h. bei geschlossener Getränkeausgabe) durch das erste Ventil in den Ablauf ("drain") strömen kann. Auf diese Weise wird noch zuverlässiger verhindert, dass es zu einem unerwünschten Nachtropfen von Getränk aus dem Ausgangsende kommt.

Die Getränkeausgabeeinheit kann ferner aufweisen:
i) ein drittes Ventil (z.B. ein zweites Kaffeeventil) zur Steuerung einer Ausgabe eines Getränks (z.B. Kaffee), wobei das dritte Ventil mindestens zwei Anschlüsse, eine offene Schaltstellung und eine geschlossene Schaltstellung aufweist,
ii) eine dritte Ventileingang-Fluidleitung mit einem Eingangsende, das fluidisch mit der ersten Ventileingang-Fluidleitung verbunden ist, und einem Ausgangsende, das fluidisch mit einem ersten Anschluss des dritten Ventils verbunden ist; und
iii) eine dritte Ventilausgang-Fluidleitung mit einem Eingangsende, das fluidisch mit einem zweiten Anschluss des dritten Ventils verbunden ist, und einem Ausgangsende, das zur Ausgabe von einem Getränk in eine äußere Umgebung der Getränkeausgabeeinheit geeignet ist.

Der Vorteil von Merkmal ii) ist, dass ein Getränk (z.B. Kaffee) von der ersten Getränkeaufnahme-Fluidleitung der Getränkeausgabeeinheit (die mit dem Getränkebereiter verbindbar ist) auch über die dritte Getränkeaufnahme-Fluidleitung ins dritte Ventil strömen kann und somit das Getränk sowohl über das Ausgangsende der ersten Ventilausgang-Fluidleitung als auch über das Ausgangsende der dritten Ventilausgang-Fluidleitung (gleichzeitig) abgegeben werden kann. Dies ermöglicht zudem, dass ein Umschalten zwischen einer Einzelausgabe und Doppelausgabe erfolgen kann.

Die dritte Ventilausgang-Fluidleitung kann eine Länge von ≤ 5 cm, bevorzugt ≤ 4 cm, besonders bevorzugt ≤ 3 cm, ganz besonders bevorzugt ≤ 2 cm, insbesondere ≤ 1 cm, aufweisen. Ferner kann die dritte Ventilausgang-Fluidleitung einen Innendurchmesser im Bereich von> 0 mm bis ≤ 7 mm, bevorzugt im Bereich von > 0 mm bis ≤ 6 mm, besonders bevorzugt im Bereich von > 0 mm bis ≤ 5 mm, ganz besonders bevorzugt im Bereich von > 0 mm bis ≤ 4 mm, insbesondere im Bereich von > 0 mm bis ≤ 3 mm, optional im Bereich von > 0 mm bis ≤ 2 mm, aufweisen. Je kürzer die Länge und je kleiner der Innendurchmesser, desto kleiner ist das Innenvolumen dieser Ventilausgang-Fluidleitung und desto stärker fallen die erfindungsgemäßen Vorteile aus.

Das dritte Ventil kann mindestens drei Anschlüsse aufweisen, wobei der dritte Anschluss des dritten Ventils fluidisch mit der zweiten Ventileingang-Fluidleitung des zweiten Ventils verbunden ist. Der Vorteil hierbei ist, dass das dritte Ventil einen Anschluss mit dem Ablauf ("drain") aufweist und somit überschüssiges Getränk in den Ablauf abgeführt werden kann, was ein Nachtropfen noch zuverlässiger verhindern kann.

Die zweite Ventileingang-Fluidleitung kann ein Eingangsende aufweisen, das fluidisch mit einem dritten Anschluss des ersten Ventils verbunden ist, und ein Ausgangsende aufweisen, das fluidisch mit einem ersten Anschluss eines zweiten Ventils des Getränkebereiters verbunden ist.

Ferner kann das dritte Ventil dergestalt konfiguriert sein, dass in einer geschlossenen Schaltstellung des dritten Ventils eine fluidleitende Verbindung zwischen dem ersten und dritten Anschluss des dritten Ventils besteht. Der Vorteil daran ist, dass ein Getränk bei geschlossenem dritten Ventil (d.h. bei geschlossener Getränkeausgabe) durch das dritte Ventil in den Ablauf ("drain") strömen kann, was noch zuverlässiger ein Nachtropfen verhindert.

Abgesehen davon kann die Getränkeausgabeeinheit ferner enthalten:
i) ein viertes Ventil (z.B. ein zentral angeordnetes Milchventil) zur Steuerung einer Ausgabe eines Getränks (z.B. Milch oder Milchschaum), wobei das vierte Ventil mindestens zwei Anschlüsse, eine offene Schaltstellung und eine geschlossene Schaltstellung aufweist,
ii) eine vierte Ventileingang-Fluidleitung mit einem Eingangsende, das mit einer zweiten Fluidleitung eines Getränkebereiters verbindbar ist oder verbunden ist, und einem Ausgangsende, das fluidisch mit einem ersten Anschluss des vierten Ventils verbunden ist;
iii) eine vierte Ventilausgang-Fluidleitung mit einem Eingangsende, das fluidisch mit einem zweiten Anschluss des vierten Ventils verbunden ist, und einem Ausgangsende, das zur Ausgabe von einem Getränk in eine äußere Umgebung der Getränkeausgabeeinheit geeignet ist.

Der Vorteil hierbei ist, dass auch über das vierte Ventil ein Getränk (z.B. Milch oder Milchschaum) abgegeben werden kann (z.B. zentral in einen Getränkebehälter). Ein weiterer Vorteil ist, dass eine Getränkeausgabe (z.B. Milchausgabe bzw. Milchschaumausgabe) sowohl bei einer Einzelausgabe wie auch bei einer Doppelausgabe jeweils aus dem vierten Ventil erfolgen kann, also im Falle einer zentralen Anordnung des vierten Ventils an einer konzentrisch zur Tasse angeordneten Ausgabestelle. Dadurch ergeben sich sowohl bei Einzelausgaben wie auch bei Doppelausgaben zum einen ein identisches Getränkebild und zum anderen ein optisch ansprechendes Getränkebild. Unschöne Doppelhügel in dem Getränkebehälter (z.B. einer Tasse) werden verhindert.

Die vierte Ventilausgang-Fluidleitung kann eine Länge von ≤ 5 cm, bevorzugt ≤ 4 cm, besonders bevorzugt ≤ 3 cm, ganz besonders bevorzugt ≤ 2 cm, insbesondere ≤ 1 cm, aufweisen. Ferner kann die vierte Ventilausgang-Fluidleitung einen Innendurchmesser im Bereich von> 0 mm bis ≤ 7 mm, bevorzugt im Bereich von > 0 mm bis ≤ 6 mm, besonders bevorzugt im Bereich von > 0 mm bis ≤ 5 mm, ganz besonders bevorzugt im Bereich von > 0 mm bis ≤ 4 mm, insbesondere im Bereich von > 0 mm bis ≤ 3 mm, optional im Bereich von > 0 mm bis ≤ 2 mm, aufweisen. Je kürzer die Länge und je kleiner der Innendurchmesser, desto kleiner ist das Innenvolumen dieser Ventilausgang-Fluidleitung und desto stärker fallen die erfindungsgemäßen Vorteile aus. Handelt es sich beim vierten Ventil um ein Milchventil, kann zudem eine Milchschaumqualiät unter minimalem Verlust an Milchschaum (d.h. ökonomisch) gesteigert werden, indem der Anfang und das Ende der Milchschaumausgabe "abgeschnitten" wird.

Die Getränkeausgabeeinheit kann ferner enthalten:
i) ein fünftes Ventil (z.B. dezentral angeordnetes erstes Milchventil) zur Steuerung einer Ausgabe eines Getränks (z.B. Milch oder Milchschaum), wobei das fünfte Ventil mindestens zwei Anschlüsse, eine offene Schaltstellung und eine geschlossene Schaltstellung aufweist,
ii) eine fünfte Ventileingang-Fluidleitung mit einem Eingangsende, das fluidisch mit einer dritten Fluidleitung eines Getränkebereiters verbindbar ist oder verbunden ist, oder einem dritten Anschluss des vierten Ventils verbunden ist, und einem Ausgangsende, das fluidisch mit einem ersten Anschluss des fünften Ventils verbunden ist;
iii) eine fünfte Ventilausgang-Fluidleitung mit einem Eingangsende, das fluidisch mit einem zweiten Anschluss des fünften Ventils verbunden ist und einem Ausgangsende, das zur Ausgabe von einem Getränk in eine äußere Umgebung der Getränkeausgabeeinheit geeignet ist.

Der Vorteil hierbei ist, dass auch über das fünfte Ventil ein Getränk (z.B. Milch oder Milchschaum) abgegeben werden kann (z.B. dezentral in einen Getränkebereiter, beispielsweise dezentral links). Ist das Eingangsende der fünften Ventileingang-Fluidleitung fluidisch mit einer dritten Fluidleitung eines Getränkebereiters (z.B. einer Mandelmilchleitung) verbunden, so kann (lokal streng getrennt) über das fünfte Ventil ein zum vierten Ventil verschiedenes Getränk ausgegeben werden (z.B. Mandelmilch über das fünfte Ventil und Kuhmilch über das vierte Ventil).

Die fünfte Ventilausgang-Fluidleitung kann eine Länge von ≤ 5 cm, bevorzugt ≤ 4 cm, besonders bevorzugt ≤ 3 cm, ganz besonders bevorzugt ≤ 2 cm, insbesondere ≤ 1 cm, aufweisen. Ferner kann die fünfte Ventilausgang-Fluidleitung einen Innendurchmesser im Bereich von> 0 mm bis ≤ 7 mm, bevorzugt im Bereich von > 0 mm bis ≤ 6 mm, besonders bevorzugt im Bereich von > 0 mm bis ≤ 5 mm, ganz besonders bevorzugt im Bereich von > 0 mm bis ≤ 4 mm, insbesondere im Bereich von > 0 mm bis ≤ 3 mm, optional im Bereich von > 0 mm bis ≤ 2 mm, aufweisen. Je kürzer die Länge und je kleiner der Innendurchmesser, desto kleiner ist das Innenvolumen dieser Ventilausgang-Fluidleitung und desto stärker fallen die erfindungsgemäßen Vorteile aus.

Das vierte Ventil kann dergestalt konfiguriert sein, dass in einer geschlossenen Schaltstellung des vierten Ventils eine fluidleitende Verbindung zwischen dem ersten und dritten Anschluss des vierten Ventils besteht. Dies hat den Vorteil, dass das Getränk (z.B. Milch) bei geschlossenem vierten Ventil zum fünften Ventil strömen kann und damit das Getränk zwar nicht über das vierte Ventil (z.B. ein zentral angeordnetes Milchventil) ausgegeben wird, aber über das fünfte Ventil (z.B. ein erstes, dezentral angeordnetes Milchventil), was eine ortsselektive Ausgabe von einem Getränk (z.B. Milch oder Milchschaum) erlaubt. Über diese Maßnahme kann prinzipiell über das fünfte Ventil ein anderers Getränk als über das vierte Ventil abgegeben werden, beispielsweise Mandelmilch anstelle von Kuhmilch, falls eine Milchquelle eines Getränkebereiters, die mit der zweiten Fluidleitung verbunden ist, von einem Benutzer manuell gewechselt wird oder der Getränkebereiter konfiguriert ist, die Milchquelle zu wechseln (z.B. konfiguriert ist, zwischen verschiedenen Milchquellen zu schalten).

Das fünfte Ventil kann mindestens drei Anschlüsse aufweisen, wobei der dritte Anschluss des fünften Ventils fluidisch mit einem dritten Anschluss eines zweiten Ventils der Getränkeausgabeeinheit verbunden ist, wobei bevorzugt das fünfte Ventil dergestalt konfiguriert ist, dass in einer geschlossenen Schaltstellung des fünften Ventils eine fluidleitende Verbindung zwischen dem ersten und dritten Anschluss des fünften Ventils besteht. Dies hat den Vorteil, dass ein Getränk auch bei geschlossenem fünften Ventil in den Ablauf ("drain") gelangen kann und somit noch zuverlässiger ein Nachtropfen von Getränk verhindert werden kann.

Die Getränkeausgabeeinheit kann ferner enthalten:
i) ein sechstes Ventil (z.B. dezentral angeordnetes zweites Milchventil) zur Steuerung einer Ausgabe eines Getränks (z.B. Milch oder Milchschaum), wobei das sechste Ventil mindestens zwei Anschlüsse, eine offene Schaltstellung und eine geschlossene Schaltstellung aufweist,
ii) eine sechste Ventileingang-Fluidleitung mit einem Eingangsende, das fluidisch mit einer vierten Fluidleitung eines Getränkebereiters verbindbar ist oder verbunden ist, oder einem vierten Anschluss des vierten Ventils verbunden ist, und einem Ausgangsende, das fluidisch mit einem ersten Anschluss des sechsten Ventils verbunden ist;
iii) eine sechste Ventilausgang-Fluidleitung mit einem Eingangsende, das fluidisch mit einem zweiten Anschluss des sechsten Ventils verbunden ist, und einem Ausgangsende, das zur Ausgabe von einem Getränk in eine äußere Umgebung der Getränkeausgabeeinheit geeignet ist.

Der Vorteil hierbei ist, dass auch über das sechste Ventil ein Getränk (z.B. Milch oder Milchschaum) abgegeben werden kann (z.B. dezentral in einen Getränkebereiter, beispielsweise dezentral rechts). Ist das Eingangsende der fünften Ventileingang-Fluidleitung fluidisch mit einer vierten Fluidleitung eines Getränkebereiters (z.B. einer Hafermilchleitung) verbunden, so kann (lokal streng getrennt) über das fünfte Ventil ein zum vierten Ventil und/oder dritten Ventil verschiedenes Getränk ausgegeben werden (z.B. Hafermilch über das sechste Ventil, Mandelmilch über das fünfte Ventil und Kuhmilch über das vierte Ventil).

Die sechste Ventilausgang-Fluidleitung kann eine Länge von ≤ 5 cm, bevorzugt ≤ 4 cm, besonders bevorzugt ≤ 3 cm, ganz besonders bevorzugt ≤ 2 cm, insbesondere ≤ 1 cm, aufweisen. Ferner kann die sechste Ventilausgang-Fluidleitung einen Innendurchmesser im Bereich von> 0 mm bis ≤ 7 mm, bevorzugt im Bereich von > 0 mm bis ≤ 6 mm, besonders bevorzugt im Bereich von > 0 mm bis ≤ 5 mm, ganz besonders bevorzugt im Bereich von > 0 mm bis ≤ 4 mm, insbesondere im Bereich von > 0 mm bis ≤ 3 mm, optional im Bereich von > 0 mm bis ≤ 2 mm, aufweisen. Je kürzer die Länge und je kleiner der Innendurchmesser, desto kleiner ist das Innenvolumen dieser Ventilausgang-Fluidleitung und desto stärker fallen die erfindungsgemäßen Vorteile aus.

Das vierte Ventil kann dergestalt konfiguriert sein, dass in einer geschlossenen Schaltstellung des vierten Ventils eine fluidleitende Verbindung zwischen dem ersten und vierten Anschluss des vierten Ventils besteht. Dies hat den Vorteil, dass das Getränk (z.B. Milch) bei geschlossenem vierten Ventil zum sechsten-Ventil strömen kann und damit das Getränk zwar nicht über das vierte Ventil (z.B. ein zentral angeordnetes Milchventil) ausgegeben wird, aber über das sechste Ventil (z.B. ein zweites, dezentral angeordnetes Milchventil), was eine ortsselektive Ausgabe von einem Getränk (z.B. Milch oder Milchschaum) erlaubt. Über diese Maßnahme kann prinzipiell über das sechste Ventil ein anderes Getränk als über das vierte Ventil abgegeben werden, beispielsweise Hafermilch anstelle von Kuhmilch, falls eine Milchquelle eines Getränkebereiters, die mit der zweiten Fluidleitung verbunden ist, von einem Benutzer manuell gewechselt wird oder der Getränkebereiter konfiguriert ist, die Milchquelle zu wechseln (z.B. konfiguriert ist, zwischen verschiedenen Milchquellen zu schalten). Ferner ist denkbar, dass ein Getränk (z.B. Milch oder Milchschaum) nicht über das vierte Ventil (z.B. als zentrale Einzelausgabe), aber sowohl über das fünfte Ventil als auch das sechste Ventil ausgegeben wird (z.B. als dezentrale Doppelausgabe).

Das sechste Ventil kann mindestens drei Anschlüsse aufweisen, wobei der dritte Anschluss des sechsten Ventils fluidisch mit einem dritten Anschluss eines zweiten Ventils der Getränkeausgabeeinheit verbunden ist, wobei bevorzugt das sechste Ventil dergestalt konfiguriert ist, dass in einer geschlossenen Schaltstellung des sechsten Ventils eine fluidleitende Verbindung zwischen dem ersten und dritten Anschluss des sechsten Ventils besteht. Dies hat den Vorteil, dass ein Getränk auch bei geschlossenem sechsten Ventil in den Ablauf ("drain") gelangen kann und somit noch zuverlässiger ein Nachtropfen von Getränk verhindert werden kann.

Das erste Ventil kann ausgewählt sein aus der Gruppe bestehend aus elektrisch schaltbares Ventil, hydraulisch schaltbares Ventil, pneumatisch schaltbares Ventil und Kombinationen hiervon, wobei das erste Ventil bevorzugt ein elektrisch schaltbares Ventil ist.

Ferner kann das erste Ventil einen Aktuator aufweisen, der geeignet ist, das erste Ventil zu schalten. Der Aktor ist bevorzugt ausgewählt aus der Gruppe bestehend aus Hubmagnet, Linearmotor, Piezoelement und Kombinationen hiervon. Ferner kann ein drittes Ventil der Getränkeausgabeeinheit den schaltbaren Aktuator aufweisen, wobei der schaltbare Aktuator geeignet sein kann, das erste Ventil und dritte Ventil auf gleiche Weise zu schalten (d.h. simultan in ihre offene Schaltstellung und/oder ihre geschlossene Schaltstellung zu schalten). Ein zweites Ventil der Getränkeausgabeeinheit (Ablauf-Ventil) kann ferner einen zweiten Aktuator enthalten, der geeignet ist, das zweite Ventil zu schalten. Abgesehen davon kann ein viertes Ventil der Getränkeausgabeeinheit einen dritten Aktuator enthalten, der geeignet ist, das vierte Ventil zu schalten. Darüber hinaus kann ein fünftes und sechstes Ventil der Getränkeausgabeeinheit einen vierten Aktuator enthalten, der geeignet ist, das fünfte und sechste Ventil zu schalten, bevorzugt auf gleiche Weise zu schalten (d.h. simultan in ihre offene Schaltstellung und/oder ihre geschlossene Schaltstellung zu schalten).

Zudem kann das erste Ventil einen Stempel aufweisen, der geeignet ist, angetrieben von einem Aktuator des ersten Ventils das erste Ventil durch seine Bewegung zu schalten. Vorzugsweise weist der Stempel an einer Kontaktfläche zum Eingangsende der ersten Ventilausgang-Fluidleitung eine axial und/oder radial nach außen weisende Lippe auf. Der Vorteil ist, dass sich das Eingangsende der ersten Ventilausgang-Fluidleitung sicherer fluiddicht verschließen lässt. Der Stempel weist bevorzugt ein elastisches Element, besonders bevorzugt eine Feder, auf, das geeignet ist, das erste Ventil in seiner geschlossenen Schaltstellung oder in seiner offenen Schaltstellung zu halten. Das Ventil kann somit als Stempelventil angesehen werden.

Abgesehen davon kann das erste Ventil ein elastisches Material, bevorzugt eine elastische Membran, aufweisen, das geeignet ist, in einer geschlossenen Schaltstellung des ersten Ventils das Eingangsende der ersten Ventilausgang-Fluidleitung fluiddicht abzudichten. Das Ventil kann somit als Membranventil angesehen werden.

Das erste Ventil kann mindestens einen Anschluss aufweisen, dessen Innenquerschnittsfläche in Richtung der Fluidleitungen, die mit dem jeweiligen Anschluss verbunden ist, abnimmt, bevorzugt von einer größeren Innenquerschnittsfläche als eine Innenquerschnittsfläche der Fluidleitungen zu einer Innenquerschnittsfläche, die zur Innenquerschnittsfläche der Fluidleitungen identisch ist, abnimmt. Der Vorteil hierbei ist, dass für das Getränk "Rastzonen" entstehen, die zu einem homogeneren Getränk (z.B. einem homogeneren Kaffee und/oder einem homogeneren Milchschaum) führen können.

Optional kann mindestens ein weiteres Ventil der Getränkeausgabeeinheit, optional alle Ventile der Getränkeausgabeeinheit, mindestens eines der oben genannten Merkmale (des ersten Ventils) aufweisen.

Das Ausgangsende der ersten Ventilausgang-Fluidleitung (d.h. der Auslauf) kann identisch sein mit einem Ausgangsende der dritten Ventilausgang-Fluidleitung, der vierten Fluidausgang-Fluidleitung, der fünften Fluidausgang-Fluidleitung und/oder der sechsten Fluidausgang-Fluidleitung (identischer Auslauf). Ferner kann das Ausgangsende der ersten Ventilausgang-Fluidleitung (d.h. der Auslauf) verschieden sein mit einem Ausgangsende der dritten Ventilausgang-Fluidleitung, der vierten Fluidausgang-Fluidleitung, der fünften Fluidausgang-Fluidleitung und/oder der sechsten Fluidausgang-Fluidleitung (verschiedener Auslauf).

Das Ausgangsende der ersten Ventilausgang-Fluidleitung kann geeignet sein, ein Getränkt entlang einer im Wesentlichen linearen Achse an die äußere Umgebung der Getränkeausgabeeinheit abzugeben. Die im Wesentlichen lineare Achse ist bevorzugt innerhalb eines imaginären Zylinders angeordnet, dessen zentrale Zylinderachse parallel zur im Wesentlichen linearen Achse steht, wobei der imaginäre Zylinder einen Radius im Bereich von 3 bis 6 cm, bevorzugt 3,5 bis 5,5 cm, besonders bevorzugt 4 bis 5 cm, insbesondere 4,5 cm, aufweist.

Hierbei kann das Ausgangsende der ersten Ventilausgang-Fluidleitung einen Abstand zur zentralen Zylinderachse des imaginären Zylinders aufweisen, der im Bereich von 0 bis 6 cm, bevorzugt 0,5 bis 5 cm, besonders bevorzugt 1 bis 4 cm, ganz besonders bevorzugt 2 bis 3 cm, insbesondere 2,5 cm, liegt.

Zudem kann das Ausgangsende einer dritten Ventilausgang-Fluidleitung der Getränkeausgabeeinheit einen Abstand zur zentralen Zylinderachse des imaginären Zylinders aufweisen, der im Bereich von 0 bis 6 cm, bevorzugt 0,5 bis 5 cm, besonders bevorzugt 1 bis 4 cm, ganz besonders bevorzugt 2 bis 3 cm, insbesondere 2,5 cm, liegt. Optional liegt ein Abstand zwischen dem Ausgangsende der dritten Ventilausgang-Fluidleitung und dem Ausgangsende der ersten Ventilausgang-Fluidleitung im Bereich von 2 bis 4 cm, bevorzugt 2,5 bis 3,5 cm, insbesondere 3 cm, liegt. Der Vorteil ist, dass die dritte Ventilausgang-Fluidleitung sehr nah an der ersten Ventilausgang-Fluidleitung liegt und damit bei einer Getränkeausgabe eine durch das dritte Ventil strömende Flüssigkeit in den gleichen Getränkebehälter abgegeben werden kann wie eine durch das erste Ventil strömende Flüssigkeit.

Abgesehen davon kann das Ausgangsende einer vierten Ventilausgang-Fluidleitung der Getränkeausgabeeinheit einen Abstand zur zentralen Zylinderachse des imaginären Zylinders aufweisen, der im Bereich von 0 bis 2 cm, bevorzugt 0,25 bis 1,75 cm, besonders bevorzugt 0,5 bis 1,5 cm, ganz besonders bevorzugt 0,75 bis 1,25 cm, insbesondere 1 cm, liegt. Optional liegt ein Abstand zwischen dem Ausgangsende der vierten Ventilausgang-Fluidleitung und dem Ausgangsende der ersten Ventilausgang-Fluidleitung im Bereich von 2 bis 4 cm, bevorzugt 2,5 bis 3,5 cm, insbesondere 3 cm, liegt. Der Vorteil ist, dass die vierte Ventilausgang-Fluidleitung sehr nah an der ersten Ventilausgang-Fluidleitung liegt und damit bei einer Getränkeausgabe eine durch das vierte Ventil strömende Flüssigkeit in den gleichen Getränkebehälter abgegeben werden kann wie eine durch das erste Ventil strömende Flüssigkeit.

Darüber hinaus kann das Ausgangsende einer fünften Ventilausgang-Fluidleitung der Getränkeausgabeeinheit einen Abstand zur zentralen Zylinderachse des imaginären Zylinders aufweist, der im Bereich von 1 bis 4 cm, s bevorzugt 1,5 bis 3,5 cm, besonders bevorzugt 2 bis 3 cm, insbesondere 2,5 cm, liegt. Optional liegt ein Abstand zwischen dem Ausgangsende der fünften Ventilausgang-Fluidleitung und dem Ausgangsende der ersten Ventilausgang-Fluidleitung im Bereich von 3 bis 7 cm, bevorzugt 4 bis 6 cm, insbesondere 5 cm, liegt. Der Vorteil ist, dass die fünfte Ventilausgang-Fluidleitung sehr nah an der ersten Ventilausgang-Fluidleitung liegt und damit bei einer Getränkeausgabe eine durch das fünfte Ventil strömende Flüssigkeit in den gleichen Getränkebehälter abgegeben werden kann wie eine durch das erste Ventil strömende Flüssigkeit.

Weiterhin kann das Ausgangsende einer sechsten Ventilausgang-Fluidleitung der Getränkeausgabeeinheit einen Abstand zur zentralen Zylinderachse des imaginären Zylinders aufweist, der im Bereich von 1 bis 4 cm, s bevorzugt 1,5 bis 3,5 cm, besonders bevorzugt 2 bis 3 cm, insbesondere 2,5 cm, liegt, wobei ein Abstand zwischen dem Ausgangsende der sechsten Ventilausgang-Fluidleitung und dem Ausgangsende einer fünften Ventilausgang-Fluidleitung optional im Bereich von 2 bis 5 cm, bevorzugt 3 bis 4 cm, insbesondere 3,5 cm, liegt. Der Vorteil ist, dass die sechste Ventilausgang-Fluidleitung sehr nah an der ersten Ventilausgang-Fluidleitung liegt und damit bei einer Getränkeausgabe eine durch das sechste Ventil strömende Flüssigkeit in den gleichen Getränkebehälter abgegeben werden kann wie eine durch das erste Ventil strömende Flüssigkeit.

Erfindungsgemäß wird ferner eine Kaffeemaschine bereitgestellt, enthaltend
i) eine erfindungsgemäße Getränkeausgabeeinheit, wobei bevorzugt das Eingangsende der ersten Ventileingang-Fluidleitung der Getränkeausgabeeinheit mit einer ersten Kaffeeleitung der Kaffeemaschine verbunden ist und besonders bevorzugt ein Eingangsende einer vierten Ventileingang-Fluidleitung der Getränkeausgabeeinheit mit einer Milchleitung der Kaffeemaschine verbunden ist; und
ii) eine Steuereinheit, die zur Steuerung von mindestens einem Ventil, bevorzugt von allen Ventilen, der Getränkeausgabeeinheit konfiguriert ist.

In einer besonders bevorzugten Ausgestaltungsform ist nicht nur ein Eingangsende einer vierten Ventileingangs-Fluidleitung mit einer Milchleitung der Kaffeemaschine verbunden, sondern auch ein Eingangsende einer fünften Ventileingangs-Fluidleitung und auch ein Eingangsende einer sechsten Ventileingangs-Fluidleitung. Damit mündet ein Fluidpfad für das Fluidmedium Milch bzw. Milchschaum in wenigstens drei Ausläufe der Getränkeausgabeeinheit. Hierbei ermöglicht eine Ansteuerung zu einer Einzelausgabe (Ausgabe an einen einzigen Getränkebehälter) durch die Steuereinheit, dass lediglich ein einziger Auslauf geöffnet ist und eine Ansteuerung zu einer Doppelausgabe (Ausgabe an jeweils zwei Trinkbehälter gleichzeitig) durch die Steuereinheit, dass für jeden der beiden Getränkebehälter jeweils ein einziger Auslauf geöffnet ist. Vorzugsweise sind diese drei Ausläufe dermaßen in der Getränkeausgabeeinheit angeordnet, dass bei einer Einzelausgabe einer der drei Ausläufe zentral über dem Getränkebehälter angeordnet ist und bei einer Doppelausgabe zwei der drei Ausläufe jeweils zentral über ihrem jeweiligen Getränkebehältern angeordnet sind. Dadurch kann bei der Einzelausgabe ein optisches Erscheinungsbild eines Getränks im Getränkebehälter produziert werden, das identisch ist zum optischen Erscheinungsbild der Doppelausgabe.

Die Steuereinheit der Kaffeemaschine kann konfiguriert sein, das erste Ventil zu öffnen, wenn die Kaffeemaschine einen Befehl zur Ausgabe von Kaffee in einen einzigen Getränkebehälter erhalten hat.

Ferner kann die Steuereinheit konfiguriert sein, das erste Ventil und ein drittes Ventil der Getränkeausgabeeinheit zu öffnen, wenn die Kaffeemaschine einen Befehl zur Ausgabe von Kaffee in einen einzigen oder zwei Getränkebehälter erhalten hat.

Abgesehen davon kann die Steuereinheit konfiguriert sein, ein zweites Ventil der Getränkeausgabeeinheit komplementär zu dem ersten Ventil, optional auch zu einem dritten, vierten, fünften und/oder sechsten Ventil der Getränkeausgabeeinheit, zu schalten, bevorzugt zu schließen, wenn die Kaffeemaschine einen Befehl zur Ausgabe von einem Getränk erhalten hat und zu öffnen, wenn der Kaffeemaschine kein Befehl zur Ausgabe von einem Getränk vorliegt.

Darüber hinaus kann die Steuereinheit konfiguriert sein, ein viertes Ventil der Getränkeausgabeeinheit zu öffnen, wenn die Kaffeemaschine einen Befehl zur Ausgabe von einem Fluid enthaltend oder bestehend aus Milch in einen einzigen Getränkebehälter erhalten hat.

Weiterhin kann die Steuereinheit konfiguriert sein, ein fünftes und sechstes Ventil der der Getränkeausgabeeinheit zu öffnen und ein viertes Ventil der Getränkeausgabeeinheit zu schließen, wenn die Kaffeemaschine einen Befehl zur Ausgabe von einem Fluid enthaltend oder bestehend aus Milch in einen einzigen Getränkebehälter (Doppelausgabe in einen einzigen Getränkebehälter) oder in zwei Getränkebehälter (Einzelausgabe in jeweils einen Getränkebehälter) erhalten hat.

Anhand der nachfolgenden Figuren soll der erfindungsgemäße Gegenstand näher erläutert werden, ohne diesen auf die hier dargestellten, spezifischen Ausgestaltungsformen einschränken zu wollen.

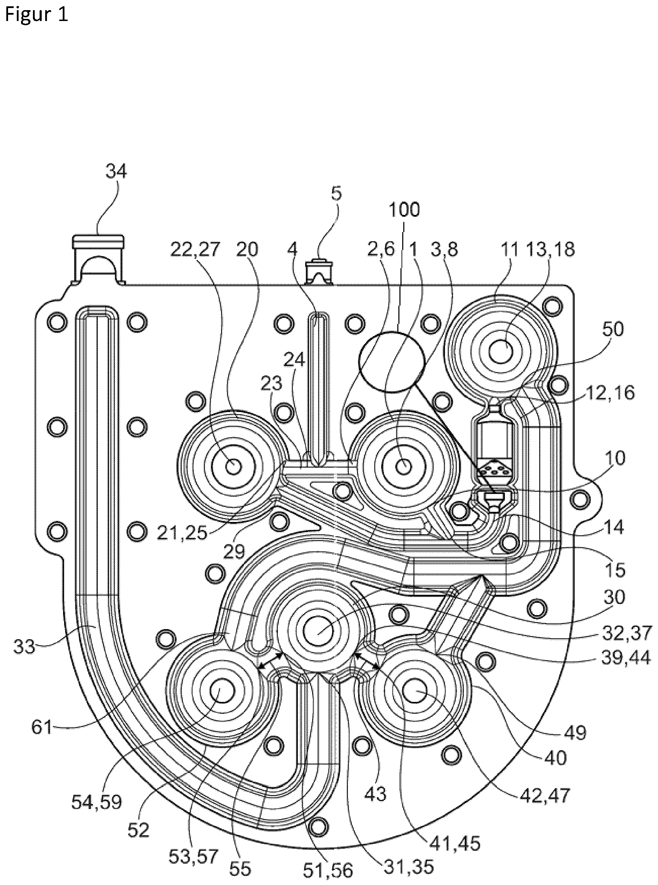

Figur 1 zeigt schematisch einen Querschnitt einer erfindungsgemäßen Getränkeausgabeeinheit. Die Getränkeausgabeeinheit enthält ein erstes Ventil 1 (1. Kaffeeventil) zur Steuerung einer Ausgabe eines Getränks (Kaffee), wobei das erste Ventil 1 drei Anschlüsse 2, 3, 10, eine offene Schaltstellung und eine geschlossene Schaltstellung aufweist. Ferner weist die Getränkeausgabeeinheit eine erste Ventileingang-Fluidleitung 4 mit einem Eingangsende 5, das mit einer ersten Fluidleitung eines Getränkebereiters verbindbar ist, und einem Ausgangsende 6, das fluidisch mit einem ersten Anschluss 2 des ersten Ventils 1 verbunden ist, auf. Zudem weist die Getränkeausgabeeinheit eine erste Ventilausgang-Fluidleitung (nicht dargestellt) mit einem Eingangsende 8, das fluidisch mit einem zweiten Anschluss 3 des ersten Ventils 1 verbunden ist, und einem Ausgangsende (nicht dargestellt), das zur Ausgabe von einem Getränk in eine äußere Umgebung der Getränkeausgabeeinheit geeignet ist, auf.

Ferner enthält die Getränkeausgabeeinheit ein zweites Ventil 11 (aktives oder passives Ablauf-Ventil bzw. "drain"-Ventil) zur Steuerung einer Abgabe von Flüssigkeit in einen Ablauf, wobei das zweite Ventil 11 drei Anschlüsse 12, 13, 50, eine offene Schaltstellung und eine geschlossene Schaltstellung aufweist. Ferner weist die Getränkeausgabeeinheit eine zweite Ventileingang-Fluidleitung 14 mit einem Eingangsende 15, das fluidisch mit einem dritten Anschluss 10 des ersten Ventils 1 verbunden ist, und einem Ausgangsende 16, das fluidisch mit einem ersten Anschluss 12 des zweiten Ventils 11 verbunden ist, auf. Zudem weist die Getränkeausgabeeinheit eine zweite Ventilausgang-Fluidleitung (nicht dargestellt) mit einem Eingangsende 18, das fluidisch mit dem zweiten Anschluss 13 des zweiten Ventils 11 verbunden ist, und einem Ausgangsende (nicht dargestellt), das zur Abgabe von einem Getränk in einen Ablauf der Getränkeausgabeeinheit geeignet ist, auf.

Abgesehen davon enthält die Getränkeausgabeeinheit ein drittes Ventil 20 (2. Kaffeeventil) zur Steuerung einer Ausgabe eines Getränks (Kaffee), wobei das dritte Ventil 20 drei Anschlüsse 21, 22, 29, eine offene Schaltstellung und eine geschlossene Schaltstellung aufweist. Ferner weist die Getränkeausgabeeinheit eine dritte Ventileingang-Fluidleitung 23 mit einem Eingangsende 24, das fluidisch mit der ersten Ventileingang-Fluidleitung 4 verbunden ist, und einem Ausgangsende 25, das fluidisch mit einem ersten Anschluss 21 des dritten Ventils 20 verbunden ist, auf. Zudem weist die Getränkeausgabeeinheit eine dritte Ventilausgang-Fluidleitung (nicht dargestellt) mit einem Eingangsende 27, das fluidisch mit einem zweiten Anschluss 22 des dritten Ventils 20 verbunden ist, und einem Ausgangsende (nicht dargestellt), das zur Ausgabe von einem Getränk in eine äußere Umgebung der Getränkeausgabeeinheit geeignet ist, auf.

Darüber hinaus enthält die Getränkeausgabeeinheit ein viertes Ventil 30 (zentrales Milchventil) zur Steuerung einer Ausgabe eines Getränks (Milch oder Milchschaum), wobei das vierte Ventil 30 vier Anschlüsse 31, 32, 39, 51, eine offene Schaltstellung und eine geschlossene Schaltstellung aufweist. Ferner enthält die Getränkausgabeeinheit eine vierte Ventileingang-Fluidleitung 33 mit einem Eingangsende 34, das mit einer zweiten Fluidleitung (nicht dargestellt) eines Getränkebereiters verbindbar ist, und einem Ausgangsende 35, das fluidisch mit einem ersten Anschluss 31 des vierten Ventils 30 verbunden ist. Zudem enthält die Getränkeausgabeeinheit eine vierte Ventilausgang-Fluidleitung (nicht dargestellt) mit einem Eingangsende 37, das fluidisch mit einem zweiten Anschluss 32 des vierten Ventils 30 verbunden ist, und einem Ausgangsende (nicht dargestellt), das zur Ausgabe von einem Getränk in eine äußere Umgebung der Getränkeausgabeeinheit geeignet ist.

Weiterhin enthält die Getränkeausgabeeinheit ein fünftes Ventil 40 zur Steuerung einer Ausgabe eines Getränks, wobei das fünfte Ventil 40 drei Anschlüsse 41, 42, 49, eine offene Schaltstellung und eine geschlossene Schaltstellung aufweist. Ferner enthält die Getränkeausgabeeinheit eine fünfte Ventileingang-Fluidleitung 43 mit einem Eingangsende 44, das fluidisch mit einem dritten Anschluss 39 des vierten Ventils 30 verbunden ist, und einem Ausgangsende 45, das fluidisch mit einem ersten Anschluss 41 des fünften Ventils 40 verbunden ist. Zudem enthält die Getränkeausgabeeinheit eine fünfte Ventilausgang-Fluidleitung (nicht dargestellt) mit einem Eingangsende 47, das fluidisch mit einem zweiten Anschluss 42 des fünften Ventils 40 verbunden ist und einem Ausgangsende (nicht dargestellt), das zur Ausgabe von einem Getränk in eine äußere Umgebung der Getränkeausgabeeinheit geeignet ist.

Zusätzlich enthält die Getränkeausgabeeinheit ein sechstes Ventil 52 zur Steuerung einer Ausgabe eines Getränks, wobei das sechste Ventil 52 drei Anschlüsse 53, 54, 61, eine offene Schaltstellung und eine geschlossene Schaltstellung aufweist. Ferner enthält die Getränkeausgabeeinheit eine sechste Ventileingang-Fluidleitung 55 mit einem Eingangsende 56, das fluidisch mit einem vierten Anschluss 51 des vierten Ventils 30 verbunden ist, und einem Ausgangsende 57, das fluidisch mit einem ersten Anschluss 53 des sechsten Ventils 52 verbunden ist. Zudem enthält die Getränkeausgabeeinheit eine sechste Ventilausgang-Fluidleitung (nicht dargestellt) mit einem Eingangsende 59, das fluidisch mit einem zweiten Anschluss 54 des sechsten Ventils 52 verbunden ist, und einem Ausgangsende (nicht dargestellt), das zur Ausgabe von einem Getränk in eine äußere Umgebung der Getränkeausgabeeinheit geeignet ist.

Die erste, zweite, dritte, vierte, fünfte und sechste Ventilausgang-Fluidleitung (nicht dargestellt) weist jeweils eine Länge von lediglich ≤ 5 cm auf und einen Innendurchmesser im Bereich von von > 0 bis ≤ 3 mm auf. Dadurch kann auf sicherer Art und Weise ein Nachtropfen von Getränk am Ausgangsende der jeweiligen Ventilausgang-Fluidleitung, d.h. am Auslauf der jeweiligen Ventilen, reduziert werden.

Ferner enthält die Getränkeausgabeeinheit hier ein weiteres Ventil 100, das ein aktives oder passives weiteres Ablauf-Ventil ("Drain"-Ventil) sein kann.

Dem Ventil 100 und/oder dem Ventil 11 kann jeweils getrennt oder zusammen ein aktiv oder passiv geregeltes Ventil in dem Fluidstrom vorgeschaltet sein.

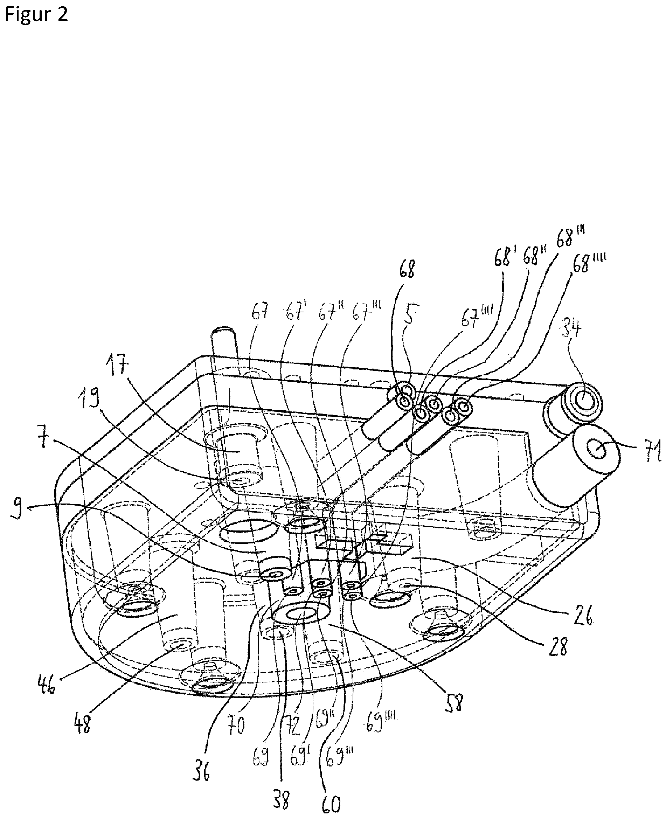

Figur 2 zeigt schematisch eine Ansicht von schräg unten auf eine erfindungsgemäße Getränkeausgabeeinheit. In dieser Ansicht ist die erste Ventilausgang-Fluidleitung 7 (erste Kaffeeleitung) und ihr Ausgangsende 9, die zweite Ventilausgangs-Fluidleitung 17 (Ablauf-Leitung bzw. "Drain"-Leitung) und ihr Ausgangsende 19, die dritte Ventilausgangs-Fluidleitung 26 (zweite Kaffeeleitung) und ihr Ausgangsende 28, die vierte Ventilausgangs-Fluidleitung 36 (zentrale Milchleitung) und ihr Ausgangsende 38, die fünfte Ventilausgangs-Fluidleitung 46 (erste dezentrale Milchleitung) und ihr Ausgangsende 48 und die sechste Ventilausgangs-Fluidleitung 58 (zweite dezentrale Milchleitung) und ihr Ausgangsende 60 erkennbar. Es ist zudem das Eingangsende 5 der ersten Ventileingang-Fluidleitung (das mit einer ersten Fluidleitung eines Getränkebereiters, z.B. einer Kaffeeleitung eines Getränkebereiters, verbindbar ist) und das Eingangsende 34 der vierten Ventileingang-Fluidleitung (das mit einer zweiten Fluidleitung eines Getränkebereiters, z.B. einer Milchleitung eines Getränkebereiters, verbindbar ist) dargestellt. Zudem weist diese Getränkeausgabeeinheit zudem eine Vielzahl von Leitungen 67, 67', 67", 67‴, 67ʺʺ für Getränkesirup mit jeweiligen Eingangsenden 68, 68', 68", 68‴, 68ʺʺ und Ausgangsenden 69, 69', 69", 69‴, 69ʺʺ auf. Abgesehen davon enthält diese Getränkeausgabeeinheit ferner eine Leitung 70 für Schokoladensirup mit einem Eingangsende 71 und einem Ausgangsende 72. Die Vielzahl der Leitungen 67, 67', 67", 67"', 67ʺʺ für Getränkesirup und die Leitung 70 für Schokoladensirup weisen jeweils kein Ventil auf, d.h. in diesen Leitungen ist ein Durchfluss ohne die in der Getränkeausgabeeinheit verorteten Ventile möglich.

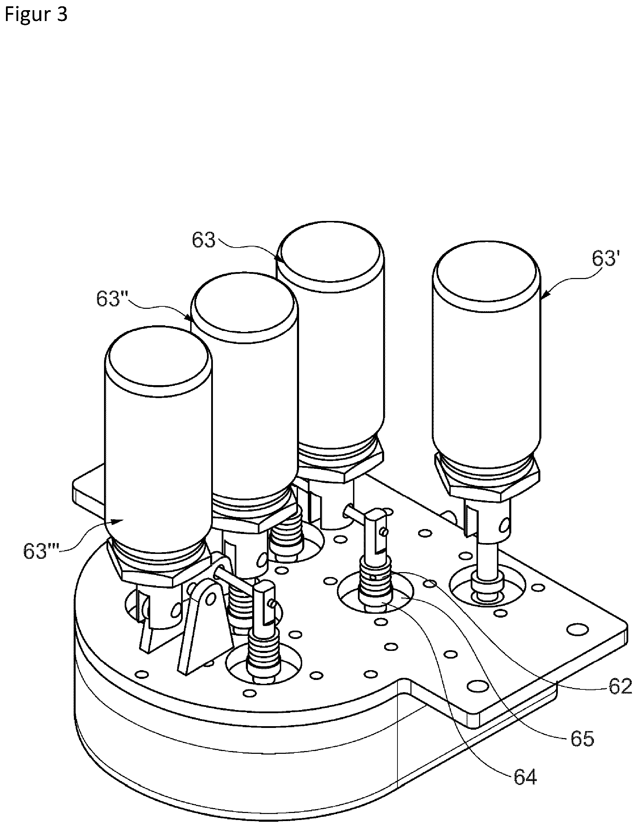

Figur 3 zeigt schematisch einen Aufbau von Ventilen, die in der erfindungsgemäßen Getränkeausgabeeinheit enthalten sein können. Es handelt sich hierbei um Ventile, die jeweils ein elastisches Element 62 (hier: eine Feder), einen Stempel 64 und ein elastisches Material 65 (hier: eine elastische Membran) aufweisen. Die Ventile weisen jeweils eine Aktuator 63, 63', 63", 63‴ auf, der geeignet ist, die Ventile zu schalten, d.h. von ihrer offenen Schaltstellung in ihre geschlossene Schaltstellung zu schalten und/oder umgekehrt. Es ist beispielsweise möglich, dass das elastische Element die jeweiligen Ventile in ihrer geschlossenen Schaltstellung hält und der jeweilige Aktuator 63, 63', 63", 63‴ geeignet ist, die jeweiligen Ventile in ihre offene Schaltstellung zu schalten. Der umgekehrte Fall ist natürlich auch möglich.

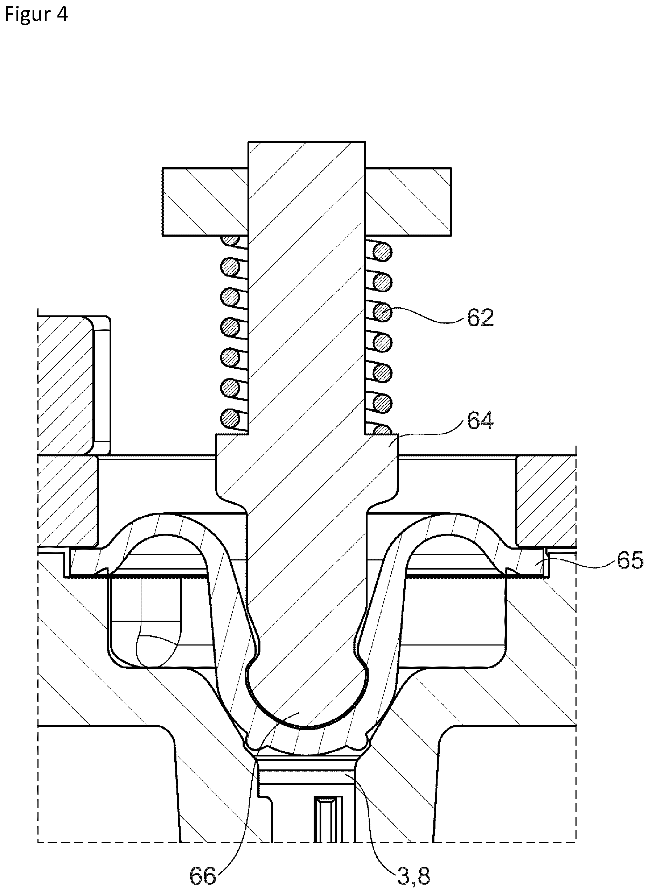

Figur 4 zeigt schematisch detaillierter einen Aufbau eines der in Figur 3 gezeigten Ventile, wobei der Aktuator nicht gezeigt ist. In dieser Darstellung ist der Stempel 64 des Ventils erkennbar, der hier über die Kraft eines elastischen Elements 62 (hier: eine Feder) auf ein elastisches Material 65 (hier: eine elastische Membran) drückt und damit das Ventil in seiner geschlossenen Schaltstellung hält. Der Stempel weist hier zudem eine Lippe 66 auf, die eine bessere Abdichtung des Eingangsendes 8 der Ventilausgang-Fluidleitung am zweiten Anschluss 3 des Ventils ermöglicht.

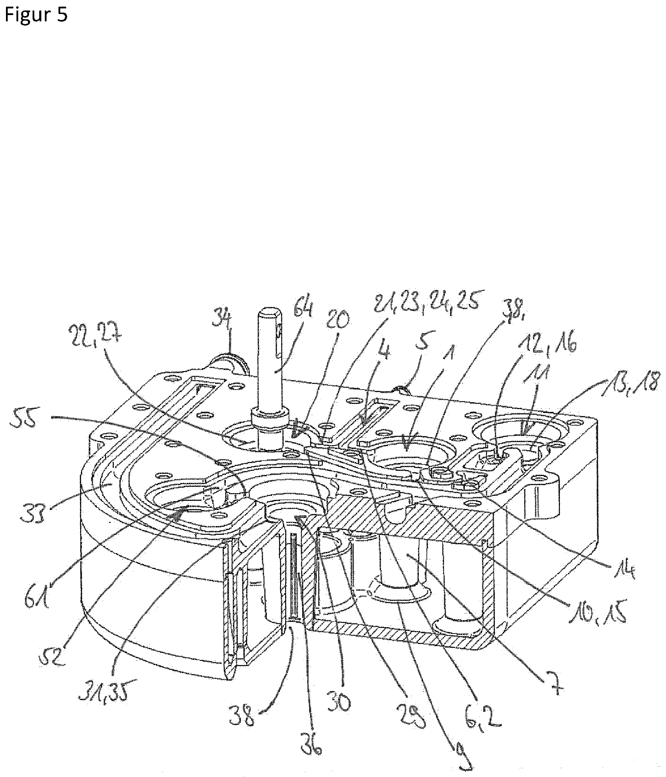

Figur 5 zeigt schematisch eine Ansicht von schräg oben auf eine erfindungsgemäße Getränkeausgabeeinheit und einen Querschnitt durch die erfindungsgemäße Getränkeausgabeeinheit. In dieser Ansicht das erste Ventil 1 (z.B. erstes Kaffeeventil) sowie der erste Anschluss 2 und der zweite Anschluss 3 des ersten Ventils 1 erkennbar und die erste Ventileingang-Fluidleitung 4 mit deren Eingangsende 5 und deren Ausgangsende 6 dargestellt. Ferner ist die erste Ventilausgang-Fluidleitung 7 mit ihrem Eingangsende 8 und ihrem Ausgangsende 9 dargestellt. In diesem Fall weist das erste Ventil 1 einen dritten Anschluss 10 auf. Die Getränkeausgabeeinheit weist hier auch ein zweites Ventil 11 (Ablauf-Ventil) auf, dessen erster Anschluss 12 und zweiter Anschluss 13 erkennbar ist. Hierbei ist die zweite Ventileingang-Fluidleitung 14, die in das zweite Ventil 11 mündet, mit ihrem Eingangsende 15 und ihrem Ausgangende 16 dargestellt und die zweite Ventilausgang-Fluidleitung 17, die aus dem zweiten Ventil 11 austritt, mit ihrem Eingangsende 18 dargestellt. Diese Getränkeausgabeeinheit weist zudem ein drittes Ventil 20 (z.B. zweites Kaffeeventil) auf, dessen Stempel 64, erster Anschluss 21 und zweiter Anschluss 22 erkennbar ist. Hierbei ist die dritte Ventileingang-Fluidleitung 23, die in das dritte Ventil 20 mündet, mit ihrem Eingangsende 24 und ihrem Ausgangende 25 dargestellt und das Eingangsende 27 der dritten Ventilausgang-Fluidleitung dargestellt. Hier weist das dritte Ventil 20 einen dritten Anschluss 29 auf. Ferner weist diese Getränkeausgabeeinheit ein viertes Ventil 30 (z.B. ein zentral angeordnetes Milchventil) auf, dessen erster Anschluss 31 erkennbar ist. Hierbei ist die vierte Ventileingang-Fluidleitung 33, die in das vierte Ventil 30 mündet, mit ihrem Eingangsende 34 und ihrem Ausgangsende 35 dargestellt und die vierte Ventilausgang-Fluidleitung 36, die aus dem vierten Ventil 30 austritt, mit ihrem Austrittende 38 dargestellt. Darüber hinaus weist diese Getränkeausgabeeinheit ein sechstes Ventil 52 (.B. dezentral angeordnetes Milchventil) auf, in das eine sechste Ventileingang-Fluidleitung 55 mündet. Das sechste Ventil 52 weist hier einen dritten Anschluss 61 auf.

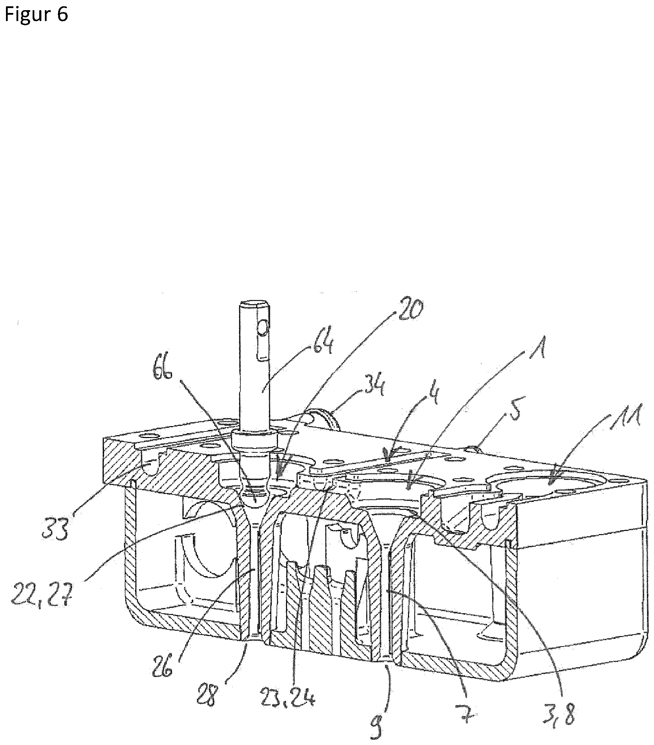

Figur 6 zeigt schematisch eine Ansicht von schräg oben auf einen Querschnitt durch die erfindungsgemäße Getränkeausgabeeinheit. In dieser Ansicht das erste Ventil 1 (z.B. erstes Kaffeeventil) sowie der zweite Anschluss 3 des ersten Ventils 1 erkennbar und die erste Ventileingang-Fluidleitung 4 mit deren Eingangsende 5 dargestellt. Ferner ist die erste Ventilausgang-Fluidleitung 7 mit ihrem Eingangsende 8 und ihrem Ausgangsende 9 dargestellt. Die Getränkeausgabeeinheit weist hier auch ein zweites Ventil 11 (Ablauf-Ventil) und ein drittes Ventil 20 (z.B. zweites Kaffeeventil), dessen zweiter Anschluss 22 und Stempel 64 erkennbar ist, auf. Hierbei ist die dritte Ventileingang-Fluidleitung 23, die in das dritte Ventil 20 mündet, mit ihrem Eingangsende 24 dargestellt und die dritte Ventilausgang-Fluidleitung 26, die aus dem dritten Ventil 20 austritt, mit ihrem Eingangsende 27 und ihrem Ausgangsende 28 dargestellt. Ferner ist eine vierte Ventileingang-Fluidleitung 33 mit ihrem Eingangsende 34 erkennbar, wobei die vierte Ventileingang-Fluidleitung 33 in ein viertes Ventil (nicht dargestellt) der Getränkeausgabeeinheit mündet. Hier ist auch die Lippe 66 des Stempels 64 des dritten Ventils 20 erkennbar.

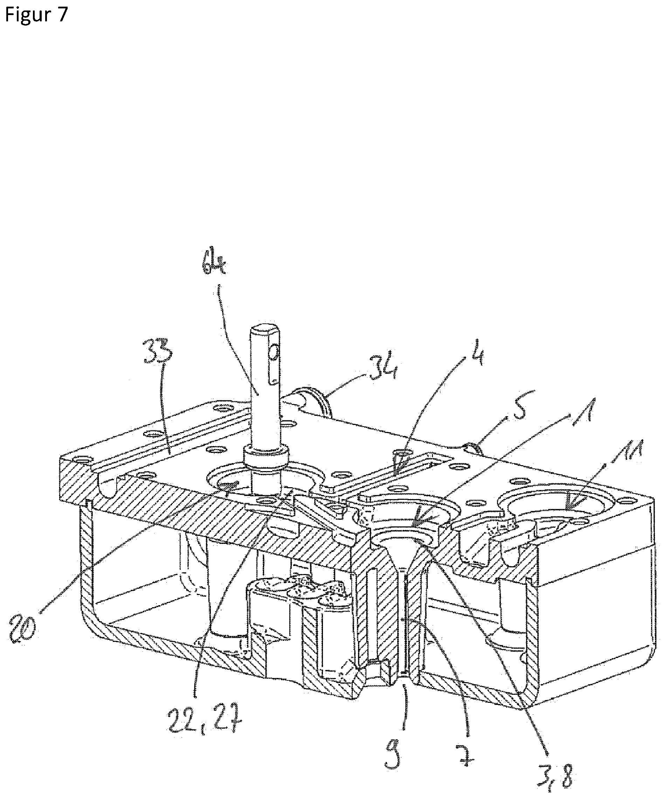

Figur 7 zeigt schematisch eine Ansicht von schräg oben auf einen weiteren Querschnitt durch die erfindungsgemäße Getränkeausgabeeinheit. In dieser Ansicht das erste Ventil 1 (z.B. erstes Kaffeeventil) sowie der zweite Anschluss 3 des ersten Ventils 1 erkennbar und die erste Ventileingang-Fluidleitung 4 mit deren Eingangsende 5 dargestellt. Ferner ist die erste Ventilausgang-Fluidleitung 7 mit ihrem Eingangsende 8 und ihrem Ausgangsende 9 dargestellt. Die Getränkeausgabeeinheit weist hier auch ein zweites Ventil 11 (Ablauf-Ventil) und ein drittes Ventil 20 (z.B. zweites Kaffeeventil), dessen zweiter Anschluss 22 und Stempel 64 erkennbar ist, auf. Hierbei ist das Eingangsende 27 der dritten Ventilausgang-Fluidleitung, die aus dem dritten Ventil 20 austritt, dargestellt. Erkennbar ist zudem eine vierte Ventileingang-Fluidleitung 33, die zu einem vierten Ventil (z.B. zentral angeordnetes Milchventil) der Getränkeausgabeeinheit führt, mit ihrem Eingangsende 34.

### Bezugszeichenliste

- 1:: erstes Ventil (z.B. erstes Kaffeeventil);
- 2:: erster Anschluss von erstem Ventil;
- 3:: zweiter Anschluss von erstem Ventil;
- 4:: erste Ventileingang-Fluidleitung;
- 5:: Eingangsende der ersten Ventileingang-Fluidleitung;
- 6:: Ausgangsende der ersten Ventileingang-Fluidleitung;
- 7:: erste Ventilausgang-Fluidleitung;
- 8:: Eingangsende der ersten Ventilausgang-Fluidleitung;
- 9:: Ausgangsende der ersten Ventilausgang-Fluidleitung;
- 10:: dritter Anschluss von erstem Ventil;
- 11:: zweites Ventil (Ablauf-Ventil = "drain"-Ventil);
- 12:: erster Anschluss von zweitem Ventil;
- 13:: zweiter Anschluss von zweitem Ventil;
- 14:: zweite Ventileingang-Fluidleitung;
- 15:: Eingangsende der zweiten Ventileingang-Fluidleitung;
- 16:: Ausgangsende der zweiten Ventileingang-Fluidleitung;
- 17:: zweite Ventilausgang-Fluidleitung;
- 18:: Eingangsende der zweiten Ventilausgang-Fluidleitung;
- 19:: Ausgangsende der zweiten Ventilausgang-Fluidleitung
- 20:: drittes Ventil (z.B. zweites Kaffeeventil);
- 21:: erster Anschluss von drittem Ventil;
- 22:: zweiter Anschluss von drittem Ventil;
- 23:: dritte Ventileingang-Fluidleitung;
- 24:: Eingangsende der dritten Ventileingang-Fluidleitung;
- 25:: Ausgangsende der dritten Ventileingang-Fluidleitung;
- 26:: dritte Ventilausgang-Fluidleitung;
- 27:: Eingangsende der dritten Ventilausgang-Fluidleitung;
- 28:: Ausgangsende der dritten Ventilausgang-Fluidleitung;
- 29:: dritter Anschluss des dritten Ventils;
- 30:: viertes Ventil (z.B. zentral angeordnetes Milchventil);
- 31:: erster Anschluss von viertem Ventil;
- 32:: zweiter Anschluss von viertem Ventil;
- 33:: vierte Ventileingang-Fluidleitung;
- 34:: Eingangsende der vierten Ventileingang-Fluidleitung;
- 35:: Ausgangsende der vierten Ventileingang-Fluidleitung;
- 36:: vierte Ventilausgang-Fluidleitung;
- 37:: Eingangsende der vierten Ventilausgang-Fluidleitung;
- 38:: Ausgangsende der vierten Ventilausgang-Fluidleitung;
- 39:: dritter Anschluss des vierten Ventils;
- 40:: fünftes Ventil (z.B. dezentral angeordnetes erstes Milchventil);
- 41:: erster Anschluss von fünftem Ventil;
- 42:: zweiter Anschluss von fünftem Ventil;
- 43:: fünfte Ventileingang-Fluidleitung;
- 44:: Eingangsende der fünften Ventileingang-Fluidleitung;
- 45:: Ausgangsende der fünften Ventileingang-Fluidleitung;
- 46:: fünfte Ventilausgang-Fluidleitung;
- 47:: Eingangsende der fünften Ventilausgang-Fluidleitung;
- 48:: Ausgangsende der fünften Ventilausgang-Fluidleitung;
- 49:: dritter Anschluss des fünften Ventils;
- 50:: dritter Anschluss des zweiten Ventils;
- 51:: vierter Anschluss des vierten Ventils;
- 52:: sechstes Ventil (z.B. dezentral angeordnetes zweites Milchventil);
- 53:: erster Anschluss von sechstem Ventil;
- 54:: zweiter Anschluss von sechstem Ventil;
- 55:: sechste Ventileingang-Fluidleitung;
- 56:: Eingangsende der sechsten Ventileingang-Fluidleitung;
- 57:: Ausgangsende der sechsten Ventileingang-Fluidleitung;
- 58:: sechste Ventilausgang-Fluidleitung;
- 59:: Eingangsende der sechsten Ventilausgang-Fluidleitung;
- 60:: Ausgangsende der sechsten Ventilausgang-Fluidleitung;
- 61:: dritter Anschluss des sechsten Ventils;
- 62:: elastisches Element (z.B. Feder);
- 63:: schaltbarer Aktuator vom ersten und dritten Ventil (z.B. Kaffeeventile);
- 63':: schaltbarer Aktuator vom zweiten Ventil (Ablauf-Ventil);
- 63":: schaltbarer Aktuator vom vierten Ventil (z.B. zentrales Milchventil);
- 63"':: schaltbarer Aktuator vom fünften und sechsten Ventil (z.B. jeweils dezentrale Milchventile);
- 64:: Stempel von Ventil;
- 65:: elastisches Material (z.B. elastische Membran);
- 66:: Lippe des Stempels;
- 67:: erste Leitung für Getränkesirup;
- 67':: zweite Leitung für Getränkesirup;
- 67":: dritte Leitung für Getränkesirup;
- 67‴:: vierte Leitung für Getränkesirup;
- 67ʺʺ:: fünfte Leitung für Getränkesirup;
- 68:: Eingangsende der ersten Leitung für Getränkesirup;
- 68':: Eingangsende der zweiten Leitung für Getränkesirup;
- 68":: Eingangsende der dritten Leitung für Getränkesirup;
- 68‴:: Eingangsende der vierten Leitung für Getränkesirup;
- 68ʺʺ:: Eingangsende der fünften Leitung für Getränkesirup;
- 69:: Ausgangsende der ersten Leitung für Getränkesirup;
- 69':: Ausgangsende der zweiten Leitung für Getränkesirup;
- 69":: Ausgangsende der dritten Leitung für Getränkesirup;
- 69‴:: Ausgangsende der vierten Leitung für Getränkesirup;
- 69ʺʺ:: Ausgangsende der fünften Leitung für Getränkesirup;
- 70:: Leitung für Schokoladensirup;
- 71:: Eingangsende der Leitung für Schokoladensirup;
- 72:: Ausgangsende der Leitung für Schokoladensirup;
- 100:: weiteres Ventil (Ablauf-Ventil = "drain"-Ventil).

## Patentansprüche

1. Getränkeausgabeeinheit eines Getränkebereiters, enthaltend:
a) ein erstes Ventil (1) zur Steuerung einer Ausgabe eines Getränks, wobei das erste Ventil (1) mindestens zwei Anschlüsse (2, 3), eine offene Schaltstellung und eine geschlossene Schaltstellung aufweist,
b) eine erste Ventileingang-Fluidleitung (4) mit einem Eingangsende (5), das mit einer ersten Fluidleitung eines Getränkebereiters verbindbar ist oder verbunden ist, und einem Ausgangsende (6), das fluidisch mit einem ersten Anschluss (2) des ersten Ventils (1) verbunden ist;
c) eine erste Ventilausgang-Fluidleitung (7) mit einem Eingangsende (8), das fluidisch mit einem zweiten Anschluss (3) des ersten Ventils (1) verbunden ist, und einem Ausgangsende (9), das zur Ausgabe von einem Getränk in eine äußere Umgebung der Getränkeausgabeeinheit geeignet ist;
**dadurch gekennzeichnet, dass** die erste Ventilausgang-Fluidleitung (7) eine Länge von ≤ 5 cm aufweist und einen Innendurchmesser im Bereich von > 0 mm bis ≤ 7 mm aufweist,
wobei das erste Ventil (1) mindestens drei Anschlüsse (2, 3, 10) aufweist,
wobei die Getränkeausgabeeinheit ferner aufweist:
i) ein zweites Ventil (11) zur Steuerung einer Abgabe von Flüssigkeit in einen Ablauf, wobei das zweite Ventil (11) mindestens zwei Anschlüsse (12, 13), eine offene Schaltstellung und eine geschlossene Schaltstellung aufweist;
ii) eine zweite Ventileingang-Fluidleitung (14) mit einem Eingangsende (15), das fluidisch mit einem dritten Anschluss (10) des ersten Ventils (1) verbunden ist, und einem Ausgangsende (16), das fluidisch mit einem ersten Anschluss (12) des zweiten Ventils (11) verbunden ist; und
iii) eine zweite Ventilausgang-Fluidleitung (17) mit einem Eingangsende (18), das fluidisch mit dem zweiten Anschluss (13) des zweiten Ventils (11) verbunden ist, und einem Ausgangsende (19), das zur Abgabe von einem Getränk in einen Ablauf der Getränkeausgabeeinheit geeignet ist.

2. Getränkeausgabeeinheit gemäß Anspruch 1, **dadurch gekennzeichnet, dass** das erste Ventil (1) dergestalt konfiguriert ist, dass in einer geschlossenen Schaltstellung des ersten Ventils (1) eine fluidleitende Verbindung zwischen dem ersten und dritten Anschluss (2, 10) des ersten Ventils (1) besteht.

3. Getränkeausgabeeinheit gemäß einem der vorhergehenden Ansprüche, **dadurch gekennzeichnet, dass** die Getränkeausgabeeinheit ferner aufweist:
i) ein drittes Ventil (20) zur Steuerung einer Ausgabe eines Getränks, wobei das dritte Ventil (20) mindestens zwei Anschlüsse (21, 22), eine offene Schaltstellung und eine geschlossene Schaltstellung aufweist,
ii) eine dritte Ventileingang-Fluidleitung (23) mit einem Eingangsende (24), das fluidisch mit der ersten Ventileingang-Fluidleitung (4) verbunden ist, und einem Ausgangsende (25), das fluidisch mit einem ersten Anschluss (21) des dritten Ventils (20) verbunden ist; und
iii) eine dritte Ventilausgang-Fluidleitung (26) mit einem Eingangsende (27), das fluidisch mit einem zweiten Anschluss (22) des dritten Ventils (20) verbunden ist, und einem Ausgangsende (28), das zur Ausgabe von einem Getränk in eine äußere Umgebung der Getränkeausgabeeinheit geeignet ist;
wobei die dritte Ventilausgang-Fluidleitung (26) bevorzugt eine Länge von ≤ 5 cm aufweist und einen Innendurchmesser im Bereich von > 0 mm bis ≤ 7 mm aufweist.

4. Getränkeausgabeeinheit gemäß Anspruch 3, **dadurch gekennzeichnet, dass** das dritte Ventil (20) mindestens drei Anschlüsse (21, 22, 29) aufweist, wobei der dritte Anschluss (29) des dritten Ventils (20) fluidisch mit der zweiten Ventileingang-Fluidleitung (14) des zweiten Ventils (11) verbunden ist, wobei bevorzugt
i) die zweite Ventileingang-Fluidleitung (14) ein Eingangsende (15) aufweist, das fluidisch mit einem dritten Anschluss (10) des ersten Ventils (1) verbunden ist, und ein Ausgangsende (16) aufweist, das fluidisch mit einem ersten Anschluss (12) eines zweiten Ventils (11) des Getränkebereiters verbunden ist; und/oder
ii) das dritte Ventil (20) dergestalt konfiguriert ist, dass in einer geschlossenen Schaltstellung des dritten Ventils (20) eine fluidleitende Verbindung zwischen dem ersten und dritten Anschluss (21, 29) des drittem Ventils (20) besteht.

5. Getränkeausgabeeinheit gemäß einem der vorhergehenden Ansprüche, **dadurch gekennzeichnet, dass** die Getränkeausgabeeinheit ferner enthält:
i) ein viertes Ventil (30) zur Steuerung einer Ausgabe eines Getränks, wobei das vierte Ventil (30) mindestens zwei Anschlüsse (31, 32), eine offene Schaltstellung und eine geschlossene Schaltstellung aufweist,
ii) eine vierte Ventileingang-Fluidleitung (33) mit einem Eingangsende (34), das mit einer zweiten Fluidleitung eines Getränkebereiters verbindbar ist oder verbunden ist, und einem Ausgangsende (35), das fluidisch mit einem ersten Anschluss (31) des vierten Ventils (30) verbunden ist;
iii) eine vierte Ventilausgang-Fluidleitung (36) mit einem Eingangsende (37), das fluidisch mit einem zweiten Anschluss (32) des vierten Ventils (30) verbunden ist, und einem Ausgangsende (38), das zur Ausgabe von einem Getränk in eine äußere Umgebung der Getränkeausgabeeinheit geeignet ist;
wobei die vierte Ventilausgang-Fluidleitung (36) bevorzugt eine Länge von ≤ 5 cm aufweist und einen Innendurchmesser im Bereich von > 0 mm bis ≤ 7 mm aufweist.

6. Getränkeausgabeeinheit gemäß Anspruch 5, **dadurch gekennzeichnet, dass** die Getränkeausgabeeinheit ferner enthält:
i) ein fünftes Ventil (40) zur Steuerung einer Ausgabe eines Getränks, wobei das fünfte Ventil (40) mindestens zwei Anschlüsse (41, 42), eine offene Schaltstellung und eine geschlossene Schaltstellung aufweist,
ii) eine fünfte Ventileingang-Fluidleitung (43) mit einem Eingangsende (44), das fluidisch mit einer dritten Fluidleitung eines Getränkebereiters verbindbar ist oder verbunden ist, oder mit einem dritten Anschluss (39) des vierten Ventils (30) verbunden ist, und einem Ausgangsende (45), das fluidisch mit einem ersten Anschluss (41) des fünften Ventils (40) verbunden ist;
iii) eine fünfte Ventilausgang-Fluidleitung (46) mit einem Eingangsende (47), das fluidisch mit einem zweiten Anschluss (42) des fünften Ventils (40) verbunden ist und einem Ausgangsende (48), das zur Ausgabe von einem Getränk in eine äußere Umgebung der Getränkeausgabeeinheit geeignet ist;
wobei die fünfte Ventilausgang-Fluidleitung (46) bevorzugt eine Länge von ≤ 5 cm aufweist und einen Innendurchmesser im Bereich von > 0 mm bis ≤ 7 mm aufweist, und optional das vierte Ventil (30) dergestalt konfiguriert ist, dass in einer geschlossenen Schaltstellung des vierten Ventils (30) eine fluidleitende Verbindung zwischen dem ersten (31) und dritten Anschluss (39) des vierten Ventils (30) besteht.

7. Getränkeausgabeeinheit gemäß Anspruch 6, **dadurch gekennzeichnet, dass** das fünfte Ventil (40) mindestens drei Anschlüsse (41, 42, 49) aufweist, wobei der dritte Anschluss (49) des fünften Ventils (40) fluidisch mit einem dritten Anschluss (50) eines zweiten Ventils (11) der Getränkeausgabeeinheit verbunden ist, wobei bevorzugt das fünfte Ventil (40) dergestalt konfiguriert ist, dass in einer geschlossenen Schaltstellung des fünften Ventils (40) eine fluidleitende Verbindung zwischen dem ersten (41) und dritten Anschluss (49) des fünften Ventils (40) besteht.

8. Getränkeausgabeeinheit gemäß einem der Ansprüche 5 bis 7, **dadurch gekennzeichnet, dass** die Getränkeausgabeeinheit ferner enthält:
i) ein sechstes Ventil (52) zur Steuerung einer Ausgabe eines Getränks, wobei das sechste Ventil (52) mindestens zwei Anschlüsse (53, 54), eine offene Schaltstellung und eine geschlossene Schaltstellung aufweist,
ii) eine sechste Ventileingang-Fluidleitung (55) mit einem Eingangsende (56), das fluidisch mit einer vierten Fluidleitung eines Getränkebereiters verbindbar ist oder verbunden ist, oder mit einem vierten Anschluss (51) des vierten Ventils (30) verbunden ist, und einem Ausgangsende (57), das fluidisch mit einem ersten Anschluss (53) des sechsten Ventils (52) verbunden ist;
iii) eine sechste Ventilausgang-Fluidleitung (58) mit einem Eingangsende (59), das fluidisch mit einem zweiten Anschluss (54) des sechsten Ventils (52) verbunden ist, und einem Ausgangsende (60), das zur Ausgabe von einem Getränk in eine äußere Umgebung der Getränkeausgabeeinheit geeignet ist;
wobei die sechste Ventilausgang-Fluidleitung (58) bevorzugt eine Länge von ≤ 5 cm aufweist und einen Innendurchmesser im Bereich von > 0 mm bis ≤ 7 mm aufweist, und optional das vierte Ventil (30) dergestalt konfiguriert ist, dass in einer geschlossenen Schaltstellung des vierten Ventils (30) eine fluidleitende Verbindung zwischen dem ersten (31) und vierten Anschluss (51) des vierten Ventils (30) besteht.

9. Getränkeausgabeeinheit gemäß Anspruch 8, **dadurch gekennzeichnet, dass** das sechste Ventil (52) mindestens drei Anschlüsse (53, 54, 61) aufweist, wobei der dritte Anschluss (61) des sechsten Ventils (52) fluidisch mit einem dritten Anschluss (50) eines zweiten Ventils (11) der Getränkeausgabeeinheit verbunden ist, wobei bevorzugt das sechste Ventil (52) dergestalt konfiguriert ist, dass in einer geschlossenen Schaltstellung des sechsten Ventils (52) eine fluidleitende Verbindung zwischen dem ersten (53) und dritten Anschluss (61) des sechsten Ventils (52) besteht.

10. Getränkeausgabeeinheit gemäß einem der vorhergehenden Ansprüche, **dadurch gekennzeichnet, dass** das erste Ventil (1)
i) ausgewählt ist aus der Gruppe bestehend aus elektrisch schaltbares Ventil, hydraulisch schaltbares Ventil, pneumatisch schaltbares Ventil und Kombinationen hiervon, wobei das erste Ventil bevorzugt ein elektrisch schaltbares Ventil ist; und/oder
ii) einen Aktuator (63) aufweist, der geeignet ist, das erste Ventil (1) zu schalten, wobei der Aktor bevorzugt ausgewählt ist aus der Gruppe bestehend aus Hubmagnet, Linearmotor, Piezoelement und Kombinationen hiervon; und/oder
iii) einen Stempel (64) aufweist, der geeignet ist, angetrieben von einem Aktuator des ersten Ventils (1) das erste Ventil (1) durch seine Bewegung zu schalten, wobei der Stempel (64) bevorzugt ein elastisches Element (62), besonders bevorzugt eine Feder, aufweist, das geeignet ist, das erste Ventil (1) in seiner geschlossenen Schaltstellung oder in seiner offenen Schaltstellung zu halten; und/oder
iv) ein elastisches Material (65), bevorzugt eine elastische Membran, aufweist, das geeignet ist, in einer geschlossenen Schaltstellung des ersten Ventils (1) das Eingangsende der ersten Ventilausgang-Fluidleitung (7) fluiddicht abzudichten;
wobei optional alle Ventile (1, 11, 20, 30, 40, 52) der Getränkeausgabeeinheit mindestens eines dieser Merkmale aufweisen.

11. Getränkeausgabeeinheit gemäß einem der vorhergehenden Ansprüche, **dadurch gekennzeichnet, dass** das erste Ventil (1) mindestens einen Anschluss aufweist, dessen Innenquerschnittsfläche in Richtung der Fluidleitungen, die mit dem jeweiligen Anschluss verbunden ist, abnimmt, bevorzugt von einer größeren Innenquerschnittsfläche als eine Innenquerschnittsfläche der Fluidleitungen zu einer Innenquerschnittsfläche, die zur Innenquerschnittsfläche der Fluidleitungen identisch ist, abnimmt, wobei optional alle Ventile der Getränkeausgabeeinheit mindestens eines dieser Merkmale aufweisen.

12. Getränkeausgabeeinheit gemäß einem der vorhergehenden Ansprüche, **dadurch gekennzeichnet, dass** das Ausgangsende der ersten Ventilausgang-Fluidleitung (7) geeignet ist, ein Getränkt entlang einer im Wesentlichen linearen Achse an die äußere Umgebung der Getränkeausgabeeinheit abzugeben, wobei die im Wesentlichen lineare Achse bevorzugt innerhalb eines imaginären Zylinders angeordnet ist, dessen zentrale Zylinderachse parallel zur im Wesentlichen linearen Achse steht, wobei der imaginäre Zylinder einen Radius im Bereich von 3 bis 6 cm, bevorzugt 3,5 bis 5,5 cm, besonders bevorzugt 4 bis 5 cm, insbesondere 4,5 cm, aufweist.

13. Getränkeausgabeeinheit gemäß Anspruch 12, **dadurch gekennzeichnet, dass** das Ausgangsende
i) der ersten Ventilausgang-Fluidleitung (7) einen Abstand zur zentralen Zylinderachse des imaginären Zylinders aufweist, der im Bereich von 0 bis 6 cm, bevorzugt 0,5 bis 5 cm, besonders bevorzugt 1 bis 4 cm, ganz besonders bevorzugt 2 bis 3 cm, insbesondere 2,5 cm, liegt; und/oder
ii) einer dritten Ventilausgang-Fluidleitung (26) der Getränkeausgabeeinheit einen Abstand zur zentralen Zylinderachse des imaginären Zylinders aufweist, der im Bereich von 0 bis 6 cm, bevorzugt 0,5 bis 5 cm, besonders bevorzugt 1 bis 4 cm, ganz besonders bevorzugt 2 bis 3 cm, insbesondere 2,5 cm, liegt, wobei ein Abstand zwischen dem Ausgangsende der dritten Ventilausgang-Fluidleitung und dem Ausgangsende der ersten Ventilausgang-Fluidleitung optional im Bereich von 2 bis 4 cm, bevorzugt 2,5 bis 3,5 cm, insbesondere 3 cm, liegt; und/oder
iii) einer vierten Ventilausgang-Fluidleitung (36) der Getränkeausgabeeinheit einen Abstand zur zentralen Zylinderachse des imaginären Zylinders aufweist, der im Bereich von 0 bis 2 cm, bevorzugt 0,25 bis 1,75 cm, besonders bevorzugt 0,5 bis 1,5 cm, ganz besonders bevorzugt 0,75 bis 1,25 cm, insbesondere 1 cm, liegt, wobei ein Abstand zwischen dem Ausgangsende der vierten Ventilausgang-Fluidleitung und dem Ausgangsende der ersten Ventilausgang-Fluidleitung optional im Bereich von 2 bis 4 cm, bevorzugt 2,5 bis 3,5 cm, insbesondere 3 cm, liegt; und/oder
iv) einer fünften Ventilausgang-Fluidleitung (46) der Getränkeausgabeeinheit einen Abstand zur zentralen Zylinderachse des imaginären Zylinders aufweist, der im Bereich von 1 bis 4 cm, s bevorzugt 1,5 bis 3,5 cm, besonders bevorzugt 2 bis 3 cm, insbesondere 2,5 cm, liegt, wobei ein Abstand zwischen dem Ausgangsende der fünften Ventilausgang-Fluidleitung und dem Ausgangsende der ersten Ventilausgang-Fluidleitung optional im Bereich von 3 bis 7 cm, bevorzugt 4 bis 6 cm, insbesondere 5 cm, liegt; und/oder
v) einer sechsten Ventilausgang-Fluidleitung (58) der Getränkeausgabeeinheit einen Abstand zur zentralen Zylinderachse des imaginären Zylinders aufweist, der im Bereich von 1 bis 4 cm, s bevorzugt 1,5 bis 3,5 cm, besonders bevorzugt 2 bis 3 cm, insbesondere 2,5 cm, liegt, wobei ein Abstand zwischen dem Ausgangsende der sechsten Ventilausgang-Fluidleitung und dem Ausgangsende einer fünften Ventilausgang-Fluidleitung optional im Bereich von 2 bis 5 cm, bevorzugt 3 bis 4 cm, insbesondere 3,5 cm, liegt.

14. Kaffeemaschine, enthaltend
i) eine Getränkeausgabeeinheit gemäß einem der vorhergehenden Ansprüche, wobei bevorzugt das Eingangsende der ersten Ventileingang-Fluidleitung der Getränkeausgabeeinheit mit einer ersten Kaffeeleitung der Kaffeemaschine verbunden ist und besonders bevorzugt ein Eingangsende (34) einer vierten Ventileingang-Fluidleitung (33) der Getränkeausgabeeinheit mit einer Milchleitung der Kaffeemaschine verbunden ist; und
ii) eine Steuereinheit, die zur Steuerung von mindestens einem Ventil, bevorzugt von allen Ventilen, der Getränkeausgabeeinheit konfiguriert ist.

15. Kaffeemaschine gemäß Anspruch 14, **dadurch gekennzeichnet, dass** die Steuereinheit konfiguriert ist,
i) das erste Ventil (1) zu öffnen, wenn die Kaffeemaschine einen Befehl zur Ausgabe von Kaffee in einen einzigen Getränkebehälter erhalten hat; und/oder
ii) das erste Ventil (1) und ein drittes Ventil (20) der Getränkeausgabeeinheit zu öffnen, wenn die Kaffeemaschine einen Befehl zur Ausgabe von Kaffee in einen einzigen oder zwei Getränkebehälter erhalten hat; und/oder
iii) ein zweites Ventil (11) der Getränkeausgabeeinheit komplementär zu dem ersten Ventil (1), optional auch zu einem dritten (20), vierten (30), fünften (40) und/oder sechsten Ventil (52) der Getränkeausgabeeinheit, zu schalten, bevorzugt zu schließen, wenn die Kaffeemaschine einen Befehl zur Ausgabe von einem Getränk erhalten hat und zu öffnen, wenn der Kaffeemaschine kein Befehl zur Ausgabe von einem Getränk vorliegt; und/oder
iv) ein viertes Ventil (30) der Getränkeausgabeeinheit zu öffnen, wenn die Kaffeemaschine einen Befehl zur Ausgabe von einem Fluid enthaltend oder bestehend aus Milch in einen einzigen Getränkebehälter erhalten hat; und/oder
v) ein fünftes (40) und sechstes Ventil (52) der der Getränkeausgabeeinheit zu öffnen und ein viertes Ventil (30) der Getränkeausgabeeinheit zu schließen, wenn die Kaffeemaschine einen Befehl zur Ausgabe von einem Fluid enthaltend oder bestehend aus Milch in einen einzigen oder zwei Getränkebehälter erhalten hat.

## Claims

1. A beverage dispensing unit of a beverage maker, comprising:
a) a first valve (1) for controlling the dispensing of a beverage, wherein the first valve (1) has at least two ports (2, 3), an open switching position and a closed switching position,
b) a first valve inlet fluid line (4) with an inlet end (5), which is connectable or is connected to a first fluid line of a beverage maker, and an outlet end (6), which is fluidically connected to a first port (2) of the first valve (1);
c) a first valve outlet fluid line (7) with an inlet end (8) fluidically connected to a second port (3) of the first valve (1), and an outlet end (9) suitable for dispensing a beverage into an external environment of the beverage dispensing unit;
**characterized in that** the first valve outlet fluid line (7) has a length of ≤ 5 cm and an inner diameter in the range from > 0 mm to ≤ 7 mm, wherein the first valve (1) has at least three ports (2, 3, 10),
wherein the beverage dispensing unit further has:
i) a second valve (11) for controlling a discharge of liquid into a drain, wherein the second valve (11) has at least two ports (12, 13), an open switching position and a closed switching position;
ii) a second valve inlet fluid line (14) with an inlet end (15) fluidically connected to a third port (10) of the first valve (1), and an outlet end (16) fluidically connected to a first port (12) of the second valve (11); and
iii) a second valve outlet fluid line (17) with an inlet end (18) fluidically connected to the second port (13) of the second valve (11), and an outlet end (19) suitable for dispensing a beverage into a drain of the beverage dispensing unit.

2. The beverage dispensing unit according to claim 1, **characterized in that** the first valve (1) is configured in such a way that, in a closed switching position of the first valve (1), there is a fluid-conducting connection between the first and third port (2, 10) of the first valve (1).

3. The beverage dispensing unit according to any one of the preceding claims, **characterized in that** the beverage dispensing unit further has
i) a third valve (20) for controlling the dispensing of a beverage, wherein the third valve (20) has at least two ports (21, 22), an open switching position and a closed switching position,
ii) a third valve inlet fluid line (23) with an inlet end (24) fluidically connected to the first valve inlet fluid line (4) and an outlet end (25) fluidically connected to a first port (21) of the third valve (20); and
iii) a third valve outlet fluid line (26) with an inlet end (27) fluidically connected to a second port (22) of the third valve (20) and an outlet end (28) suitable for dispensing a beverage into an external environment of the beverage dispensing unit;
wherein the third valve outlet fluid line (26) preferably has a length of ≤ 5 cm and an inner diameter in the range from > 0 mm to ≤ 7 mm.

4. The beverage dispensing unit according to claim 3, **characterized in that** the third valve (20) has at least three ports (21, 22, 29), wherein the third port (29) of the third valve (20) is fluidically connected to the second valve inlet fluid line (14) of the second valve (11), wherein preferably
i) the second valve inlet fluid line (14) has an inlet end (15) fluidically connected to a third port (10) of the first valve (1) and an outlet end (16) fluidically connected to a first port (12) of a second valve (11) of the beverage maker; and/or
ii) the third valve (20) is configured in such a way that, in a closed switching position of the third valve (20), there is a fluid-conducting connection between the first and third ports (21, 29) of the third valve (20).

5. The beverage dispensing unit according to any one of the preceding claims, **characterized in that** the beverage dispensing unit further includes:
i) a fourth valve (30) for controlling the dispensing of a beverage, wherein the fourth valve (30) has at least two ports (31, 32), an open switching position and a closed switching position,
ii) a fourth valve inlet fluid line (33) with an inlet end (34) which is connectable or is connected to a second fluid line of a beverage maker, and an outlet end (35) which is fluidically connected to a first port (31) of the fourth valve (30);
iii) a fourth valve outlet fluid line (36) with an inlet end (37) fluidically connected to a second port (32) of the fourth valve (30) and an outlet end (38) suitable for dispensing a beverage into an external environment of the beverage dispensing unit;
wherein the fourth valve outlet fluid line (36) preferably has a length of ≤ 5 cm and an inner diameter in the range from > 0 mm to ≤ 7 mm.

6. The beverage dispensing unit according claim 5, **characterized in that** the beverage dispensing unit further includes:
i) a fifth valve (40) for controlling the dispensing of a beverage, wherein the fifth valve (40) has at least two ports (41, 42), an open switching position and a closed switching position,
ii) a fifth valve inlet fluid line (43) with an inlet end (44) which is or may be fluidically connected to a third fluid line of a beverage maker, or is connected to a third port (39) of the fourth valve (30), and an outlet end (45) which is fluidically connected to a first port (41) of the fifth valve (40);
iii) a fifth valve outlet fluid line (46) with an inlet end (47) fluidically connected to a second port (42) of the fifth valve (40) and an outlet end (48) suitable for dispensing a beverage into an external environment of the beverage dispensing unit;
wherein the fifth valve outlet fluid line (46) preferably has a length of ≤ 5 cm and has an inner diameter in the range from > 0 mm to ≤ 7 mm, and optionally the fourth valve (30) is configured in such a way that in a closed switching position of the fourth valve (30) there is a fluid-conducting connection between the first (31) and third port (39) of the fourth valve (30).

7. The beverage dispensing unit according to claim 6, **characterized in that** the fifth valve (40) has at least three ports (41, 42, 49), wherein the third port (49) of the fifth valve (40) is fluidically connected to a third port (50) of a second valve (11) of the beverage dispensing unit, wherein the fifth valve (40) is preferably configured in such a way that, in a closed switching position of the fifth valve (40), there is a fluid-conducting connection between the first (41) and third port (49) of the fifth valve (40).

8. The beverage dispensing unit according to any one of claims 5 to 7, **characterized in that** the beverage dispensing unit further includes:
i) a sixth valve (52) for controlling the dispensing of a beverage, wherein the sixth valve (52) has at least two ports (53, 54), an open switching position and a closed switching position,
ii) a sixth valve inlet fluid line (55) with an inlet end (56) which is fluidically connectable or is fluidically connected to a fourth fluid line of a beverage maker, or is connected to a fourth port (51) of the fourth valve (30), and an outlet end (57) which is fluidically connected to a first port (53) of the sixth valve (52);
iii) a sixth valve outlet fluid line (58) with an inlet end (59) fluidically connected to a second port (54) of the sixth valve (52) and an outlet end (60) suitable for dispensing a beverage into an external environment of the beverage dispensing unit;
wherein the sixth valve outlet fluid line (58) preferably has a length of ≤ 5 cm and has an inner diameter in the range from > 0 mm to ≤ 7 mm, and optionally the fourth valve (30) is configured in such a way that in a closed switching position of the fourth valve (30) there is a fluid-conducting connection between the first (31) and fourth port (51) of the fourth valve (30).

9. The beverage dispensing unit according to claim 8, **characterized in that** the sixth valve (52) has at least three ports (53, 54, 61), wherein the third port (61) of the sixth valve (52) is fluidically connected to a third port (50) of a second valve (11) of the beverage dispensing unit, wherein the sixth valve (52) is preferably configured in such a way that, in a closed switching position of the sixth valve (52), there is a fluid-conducting connection between the first (53) and third port (61) of the sixth valve (52).

10. The beverage dispensing unit according to any one of the preceding claims, **characterized in that** the first valve (1)
i) is selected from the group consisting of electrically switchable valve, hydraulically switchable valve, pneumatically switchable valve and combinations thereof, wherein the first valve is preferably an electrically switchable valve; and/or
ii) has an actuator (63) suitable for switching the first valve (1), wherein the actuator is preferably selected from the group consisting of linear solenoid, linear motor, piezo element and combinations thereof; and/or
iii) has a plunger (64) which is suitable for switching the first valve (1) by its movement, driven by an actuator of the first valve (1), wherein the plunger (64) preferably has an elastic element (62), particularly preferably a spring, which is suitable for holding the first valve (1) in its closed switching position or in its open switching position; and/or
iv) has an elastic material (65), preferably an elastic diaphragm, which is suitable for sealing the inlet end of the first valve outlet fluid line (7) in a fluid-tight manner in a closed switching position of the first valve (1);
wherein optionally all valves (1, 11, 20, 30, 40, 52) of the beverage dispensing unit have at least one of these features.

11. The beverage dispensing unit according to any one of the preceding claims, **characterized in that** the first valve (1) has at least one port of which the internal cross-sectional area decreases in the direction of the fluid lines connected to the respective port, preferably from a larger internal cross-sectional area than an internal cross-sectional area of the fluid lines to an internal cross-sectional area which is identical to the internal cross-sectional area of the fluid lines, wherein optionally all valves of the beverage dispensing unit have at least one of these features.

12. The beverage dispensing unit according to any one of the preceding claims, **characterized in that** the outlet end of the first valve outlet fluid line (7) is suitable for dispensing a beverage along a substantially linear axis to the external environment of the beverage dispensing unit, wherein the substantially linear axis is preferably arranged within an imaginary cylinder of which the central cylinder axis is parallel to the substantially linear axis, wherein the imaginary cylinder has a radius in the range from 3 to 6 cm, preferably 3.5 to 5.5 cm, particularly preferably 4 to 5 cm, in particular 4.5 cm.

13. The beverage dispensing unit according claim 12, **characterized in that** the outlet end
i) of the first valve outlet fluid line (7) has a distance from the central cylinder axis of the imaginary cylinder which is in the range from 0 to 6 cm, preferably 0.5 to 5 cm, particularly preferably 1 to 4 cm, most preferably 2 to 3 cm, in particular 2.5 cm; and/or
ii) of a third valve outlet fluid line (26) of the beverage dispensing unit has a distance from the central cylinder axis of the imaginary cylinder which is in the range from 0 to 6 cm, preferably 0.5 to 5 cm, particularly preferably 1 to 4 cm, most preferably 2 to 3 cm, in particular 2.5 cm, wherein a distance between the outlet end of the third valve outlet fluid line and the outlet end of the first valve outlet fluid line is optionally in the range from 2 to 4 cm, preferably 2.5 to 3.5 cm, in particular 3 cm; and/or
iii) of a fourth valve outlet fluid line (36) of the beverage dispensing unit has a distance from the central cylinder axis of the imaginary cylinder which is in the range from 0 to 2 cm, preferably 0.25 to 1.75 cm, particularly preferably 0.5 to 1.5 cm, very particularly preferably 0,75 to 1.25 cm, in particular 1 cm, wherein a distance between the outlet end of the fourth valve outlet fluid line and the outlet end of the first valve outlet fluid line is optionally in the range from 2 to 4 cm, preferably 2.5 to 3.5 cm, in particular 3 cm; and/or
iv) of a fifth valve outlet fluid line (46) of the beverage dispensing unit has a distance from the central cylinder axis of the imaginary cylinder which is in the range from 1 to 4 cm, preferably 1.5 to 3.5 cm, particularly preferably 2 to 3 cm, in particular 2.5 cm, wherein a distance between the outlet end of the fifth valve outlet fluid line and the outlet end of the first valve outlet fluid line is optionally in the range from 3 to 7 cm, preferably 4 to 6 cm, in particular 5 cm; and/or
v) of a sixth valve outlet fluid line (58) of the beverage dispensing unit has a distance from the central cylinder axis of the imaginary cylinder which is in the range from 1 to 4 cm, preferably 1.5 to 3.5 cm, particularly preferably 2 to 3 cm, in particular 2.5 cm, wherein a distance between the outlet end of the sixth valve outlet fluid line and the outlet end of a fifth valve outlet fluid line is optionally in the range from 2 to 5 cm, preferably 3 to 4 cm, in particular 3.5 cm.

14. A coffee machine, comprising
i) a beverage dispensing unit according to any one of the preceding claims, wherein preferably the inlet end of the first valve inlet fluid line of the beverage dispensing unit is connected to a first coffee line of the coffee machine and particularly preferably an inlet end (34) of a fourth valve inlet fluid line (33) of the beverage dispensing unit is connected to a milk line of coffee machine; and
ii) a control unit configured to control at least one valve, preferably all valves, of the beverage dispensing unit.

15. The coffee machine according to claim 14, **characterized in that** the control unit is configured
i) to open the first valve (1) when the coffee machine has received a command to dispense coffee into a single beverage container; and/or
ii) to open the first valve (1) and a third valve (20) of the beverage dispensing unit when the coffee machine has received a command to dispense coffee into a single beverage container or two beverage containers; and/or
iii) to switch a second valve (11) of the beverage dispensing unit in a manner complementary to the first valve (1), optionally also to a third (20), fourth (30), fifth (40) and/or sixth valve (52) of the beverage dispensing unit, preferably to close it when the coffee machine has received a command to dispense a beverage and to open it when the coffee machine has not received a command to dispense a beverage; and/or
iv) to open a fourth valve (30) of the beverage dispensing unit when the coffee machine has received a command to dispense a fluid comprising or consisting of milk into a single beverage container; and/or
v) to open a fifth (40) and sixth valve (52) of the beverage dispensing unit and to close a fourth valve (30) of the beverage dispensing unit when the coffee machine has received a command to dispense a fluid comprising or consisting of milk into a single beverage container or two beverage containers.

## Revendications

1. Unité de distribution de boissons d'un préparateur de boissons, contenant :
a) une première vanne (1) permettant de commander la distribution d'une boisson, dans laquelle la première vanne (1) présente au moins deux raccords (2, 3), une position de commutation ouverte et une position de commutation fermée,
b) une première conduite fluidique d'entrée de vanne (4) avec une extrémité d'entrée (5) qui peut être reliée ou est reliée à une première conduite fluidique d'un préparateur de boissons, et une extrémité de sortie (6) qui est reliée fluidiquement à un premier raccord (2) de la première vanne (1) ;
c) une première conduite fluidique de sortie de vanne (7) avec une extrémité d'entrée (8) qui est reliée fluidiquement à un deuxième raccord (3) de la première vanne (1) et une extrémité de sortie (9) appropriée pour distribuer une boisson dans un environnement extérieur de l'unité de distribution de boissons ;
**caractérisée en ce que** la première conduite fluidique de sortie de vanne (7) présente une longueur ≤ 5 cm et un diamètre intérieur dans la plage comprise entre > 0 mm et ≤ 7 mm,
dans laquelle la première vanne (1) présente au moins trois raccords (2, 3, 10),
dans laquelle l'unité de distribution de boissons présente en outre :
i) une deuxième vanne (11) permettant de commander le débit de liquide au sein d'un écoulement, dans laquelle la deuxième vanne (11) présente au moins deux raccords (12, 13), une position de commutation ouverte et une position de commutation fermée ;
ii) une deuxième conduite fluidique d'entrée de vanne (14) avec une extrémité d'entrée (15) reliée fluidiquement à un troisième raccord (10) de la première vanne (1), et une extrémité de sortie (16) reliée fluidiquement à un premier raccord (12) de la deuxième vanne (11) ; et
iii) une deuxième conduite fluidique de sortie de vanne (17) avec une extrémité d'entrée (18) qui est reliée fluidiquement à un deuxième raccord (13) de la deuxième vanne (11), et une extrémité de sortie (19) qui est appropriée pour la distribution d'une boisson au sein d'un écoulement de l'unité de distribution de boissons.

2. Unité de distribution de boissons selon la revendication 1, **caractérisée en ce que** la première vanne (1) est configurée de telle manière que, dans une position de commutation fermée de la première vanne (1), il existe une liaison conductrice de fluide entre les premier et troisième raccords (2, 10) de la première vanne (1).

3. Unité de distribution de boissons selon l'une quelconque des revendications précédentes, **caractérisée en ce que** l'unité de distribution de boissons présente en outre :
i) une troisième vanne (20) permettant de commander la distribution d'une boisson, dans laquelle la troisième vanne (20) présente au moins deux raccords (21, 22), une position de commutation ouverte et une position de commutation fermée,
ii) une troisième conduite fluidique d'entrée de vanne (23) avec une extrémité d'entrée (24) reliée fluidiquement à la première conduite fluidique d'entrée de vanne (4), et une extrémité de sortie (25) reliée fluidiquement à un premier raccord (21) de la troisième vanne (20) ; et
iii) une troisième conduite fluidique de sortie de vanne (26) avec une extrémité d'entrée (27) qui est reliée fluidiquement à un deuxième raccord (22) de la troisième vanne (20), et une extrémité de sortie (28) qui est appropriée pour la distribution d'une boisson dans un environnement extérieur de l'unité de distribution de boissons ;
dans laquelle la troisième conduite fluidique de sortie de vanne (26) présente de manière préférée une longueur ≤ 5 cm et un diamètre intérieur dans la plage comprise entre > 0 mm et ≤ 7 mm.

4. Unité de distribution de boissons selon la revendication 3, **caractérisée en ce que** la troisième vanne (20) présente au moins trois raccords (21, 22, 29), dans laquelle le troisième raccord (29) de la troisième vanne (20) est relié fluidiquement à la deuxième conduite fluidique d'entrée de vanne (14) de la deuxième vanne (11), dans laquelle de manière préférée
i) la deuxième conduite fluidique d'entrée de vanne (14) présente une extrémité d'entrée (15) reliée fluidiquement à un troisième raccord (10) de la première vanne (1), et une extrémité de sortie (16) reliée fluidiquement à un premier raccord (12) d'une deuxième vanne (11) du préparateur de boissons ; et/ou
ii) la troisième vanne (20) est configurée de telle manière que, dans une position de commutation fermée de la troisième vanne (20), il existe une liaison conductrice de fluide entre les premier et troisième raccords (21, 29) de la troisième vanne (20).

5. Unité de distribution de boissons selon l'une quelconque des revendications précédentes, **caractérisée en ce que** l'unité de distribution de boissons contient en outre :
i) une quatrième vanne (30) permettant de commander la distribution d'une boisson, dans laquelle la quatrième vanne (30) présente au moins deux raccords (31, 32), une position de commutation ouverte et une position de commutation fermée,
ii) une quatrième conduite fluidique d'entrée de vanne (33) avec une extrémité d'entrée (34) qui peut être reliée ou est reliée à une deuxième conduite fluidique d'un préparateur de boissons, et une extrémité de sortie (35) qui est reliée fluidiquement à un premier raccord (31) de la quatrième vanne (30) ;
iii) une quatrième conduite fluidique de sortie de vanne (36) avec une extrémité d'entrée (37) qui est reliée fluidiquement à un deuxième raccord (32) de la quatrième vanne (30), et une extrémité de sortie (38) qui est appropriée pour la distribution d'une boisson dans un environnement extérieur de l'unité de distribution de boissons ;
dans laquelle la quatrième conduite fluidique de sortie de vanne (36) présente de manière préférée une longueur ≤ 5 cm et un diamètre intérieur dans la plage comprise entre > 0 mm et ≤ 7 mm.

6. Unité de distribution de boissons selon la revendication 5, **caractérisée en ce que** l'unité de distribution de boissons comprend en outre :
i) une cinquième vanne (40) permettant de commander la distribution d'une boisson, dans laquelle la cinquième vanne (40) présente au moins deux raccords (41, 42), une position de commutation ouverte et une position de commutation fermée,
ii) une cinquième conduite fluidique d'entrée de vanne (43) avec une extrémité d'entrée (44) qui peut être reliée fluidiquement à ou est reliée à une troisième conduite fluidique d'un préparateur de boissons, ou qui est reliée à un troisième raccord (39) de la quatrième vanne (30), et une extrémité de sortie (45) qui est reliée fluidiquement à un premier raccord (41) de la cinquième vanne (40) ;
iii) une cinquième conduite fluidique de sortie de vanne (46) avec une extrémité d'entrée (47) qui est reliée fluidiquement à un deuxième raccord (42) de la cinquième vanne (40), et une extrémité de sortie (48) qui est appropriée pour la distribution d'une boisson dans un environnement extérieur de l'unité de distribution de boissons ;
dans laquelle la cinquième conduite fluidique de sortie de vanne (46) présente de manière préférée une longueur ≤ 5 cm et un diamètre intérieur dans la plage comprise entre > 0 mm et ≤ 7 mm, et de manière optionnelle la quatrième vanne (30) est configurée de telle manière que, dans une position de commutation fermée de la quatrième vanne (30), il existe une liaison conductrice de fluide entre le premier raccord (31) et le troisième raccord (39) de la quatrième vanne (30).

7. Unité de distribution de boissons selon la revendication 6, **caractérisée en ce que** la cinquième vanne (40) présente au moins trois raccords (41, 42, 49), dans laquelle le troisième raccord (49) de la cinquième vanne (40) est relié fluidiquement à un troisième raccord (50) d'une deuxième vanne (11) de l'unité de distribution de boissons, dans laquelle de manière préférée la cinquième vanne (40) est configurée de telle manière que, dans une position de commutation fermée de la cinquième vanne (40), il existe une liaison conductrice de fluide entre le premier raccord (41) et le troisième raccord (49) de la cinquième vanne (40).

8. Unité de distribution de boissons selon l'une quelconque des revendications 5 à 7, **caractérisée en ce que** l'unité de distribution de boissons contient en outre :
i) une sixième vanne (52) permettant de commander la distribution d'une boisson, dans laquelle la sixième vanne (52) présente au moins deux raccords (53, 54), une position de commutation ouverte et une position de commutation fermée,
ii) une sixième conduite fluidique d'entrée de vanne (55) avec une extrémité d'entrée (56) qui peut être reliée fluidiquement à ou est reliée à une quatrième conduite fluidique d'un préparateur de boissons, ou qui est reliée à un quatrième raccord (51) de la quatrième vanne (30), et une extrémité de sortie (57) qui est reliée fluidiquement à un premier raccord (53) de la sixième vanne (52) ;
iii) une sixième conduite fluidique de sortie de vanne (58) avec une extrémité d'entrée (59) qui est reliée fluidiquement à un deuxième raccord (54) de la sixième vanne (52), et une extrémité de sortie (60) qui est appropriée pour la distribution d'une boisson dans un environnement extérieur de l'unité de distribution de boissons ;
dans laquelle la sixième conduite fluidique de sortie de vanne (58) présente de manière préférée une longueur ≤ 5 cm et un diamètre intérieur dans la plage comprise entre > 0 mm et ≤ 7 mm, et de manière optionnelle la quatrième vanne (30) est configurée de telle manière que, dans une position de commutation fermée de la quatrième vanne (30), il existe une liaison conductrice de fluide entre le premier raccord (31) et le quatrième raccord (51) de la quatrième vanne (30).

9. Unité de distribution de boissons selon la revendication 8, **caractérisée en ce que** la sixième vanne (52) présente au moins trois raccords (53, 54, 61), dans laquelle le troisième raccord (61) de la sixième vanne (52) est relié fluidiquement à un troisième raccord (50) d'une deuxième vanne (11) de l'unité de distribution de boissons, dans laquelle de manière préférée la sixième vanne (52) est configurée de telle manière que, dans une position de commutation fermée de la sixième vanne (52), il existe une liaison conductrice de fluide entre le premier raccord (53) et le troisième raccord (61) de la sixième vanne (52).

10. Unité de distribution de boissons selon l'une quelconque des revendications précédentes, **caractérisée en ce que** la première vanne (1)
i) est choisie parmi le groupe constitué des vannes à commande électrique, des vannes à commande hydraulique, des vannes à commande pneumatique et de leurs combinaisons, dans laquelle la première vanne est de manière préférée une vanne à commande électrique ; et/ou
ii) présente un actionneur (63) approprié pour commuter la première vanne (1), dans laquelle l'actionneur est de manière préférée choisi parmi le groupe constitué des aimants de levage, des moteurs linéaires, des éléments piézoélectriques et de leurs combinaisons ; et/ou
iii) présente un piston (64) approprié pour commuter la première vanne (1) de par son mouvement, en étant actionné par un actionneur de la première vanne (1), dans laquelle ledit piston (64) présente de manière préférée un élément élastique (62), de manière particulièrement préférée un ressort, approprié pour retenir la première vanne (1) dans sa position de commutation fermée ou dans sa position de commutation ouverte ; et/ou
iv) présente un matériau élastique (65), de manière préférée une membrane élastique, approprié pour rendre sceller étanche au fluide l'extrémité d'entrée de la première conduite fluidique de sortie de vanne (7) dans une position de commutation fermée de la première vanne (1) ;
dans laquelle, de manière optionnelle, toutes les vannes (1, 11, 20, 30, 40, 52) de l'unité de distribution de boissons présentent au moins une des dites caractéristiques.

11. Unité de distribution de boissons selon l'une quelconque des revendications précédentes, **caractérisée en ce que** la première vanne (1) présente au moins un raccord dont la surface de section transversale interne diminue en direction des conduites fluidiques reliées au raccord respectif, de manière préférée diminue à partir d'une surface de section transversale interne supérieure à celle d'une surface de section transversale interne des conduites fluidiques vers une surface de section transversale interne identique à la surface de section transversale interne des conduites fluidiques, dans laquelle, de manière optionnelle, toutes les vannes de l'unité de distribution de boissons présentent au moins une des dites caractéristiques.

12. Unité de distribution de boissons selon l'une quelconque des revendications précédentes, **caractérisée en ce que** l'extrémité de sortie de la première conduite fluidique de sortie de vanne (7) est appropriée pour distribuer une boisson le long d'un axe essentiellement linéaire vers l'environnement extérieur de l'unité de distribution de boissons, dans laquelle l'axe essentiellement linéaire est de manière préférée agencé à l'intérieur d'un cylindre imaginaire dont l'axe central de cylindre est parallèle à l'axe essentiellement linéaire, dans laquelle le cylindre imaginaire présente un rayon dans la plage comprise entre 3 et 6 cm, de manière préférée comprise entre 3,5 et 5,5 cm, de manière particulièrement préférée comprise entre 4 et 5 cm, en particulier est égal à 4,5 cm.

13. Unité de distribution de boissons selon la revendication 12, **caractérisée en ce que** l'extrémité de sortie
i) de la première conduite fluidique de sortie de vanne (7) présente une distance par rapport à l'axe central de cylindre du cylindre imaginaire qui se situe dans la plage comprise entre 0 et 6 cm, de manière préférée comprise entre 0,5 et 5 cm, de manière particulièrement préférée comprise entre 1 et 4 cm, de manière plus particulièrement préférée comprise entre 2 et 3 cm, en particulier qui est égale à 2,5 cm ; et/ou
ii) d'une troisième conduite fluidique de sortie de vanne (26) de l'unité de distribution de boissons présente une distance par rapport à l'axe central de cylindre du cylindre imaginaire qui se situe dans la plage comprise entre 0 et 6 cm, de manière préférée comprise entre 0,5 et 5 cm, de manière particulièrement préférée comprise entre 1 et 4 cm, de manière plus particulièrement préférée comprise entre 2 et 3 cm, en particulier qui est égale à 2,5 cm, dans laquelle une distance entre l'extrémité de sortie de la troisième conduite fluidique de sortie de vanne et l'extrémité de sortie de la première conduite fluidique de sortie de vanne se situe de manière optionnelle dans la plage comprise entre 2 et 4 cm, de manière préférée comprise entre 2,5 et 3,5 cm, en particulier est égale à 3 cm ; et/ou
iii) d'une quatrième conduite fluidique de sortie de vanne (36) de l'unité de distribution de boissons présente une distance par rapport à l'axe central de cylindre du cylindre imaginaire qui se situe dans la plage comprise entre 0 et 2 cm, de manière préférée comprise entre 0,25 et 1,75 cm, de manière particulièrement préférée comprise entre 0,5 et 1,5 cm, de manière plus particulièrement préférée comprise entre 0,75 et 1,25 cm, en particulier qui est égale à 1 cm, dans laquelle une distance entre l'extrémité de sortie de la quatrième conduite fluidique de sortie de vanne et l'extrémité de sortie de la première conduite fluidique de sortie de vanne se situe de manière optionnelle dans la plage comprise entre 2 et 4 cm, de manière préférée comprise entre 2,5 et 3,5 cm, en particulier est égale à 3 cm ; et/ou
iv) d'une cinquième conduite fluidique de sortie de vanne (46) de l'unité de distribution de boissons présente une distance par rapport à l'axe central de cylindre du cylindre imaginaire qui se situe dans la plage comprise entre 1 et 4 cm, de manière préférée comprise entre 1,5 et 3,5 cm, de manière particulièrement préférée comprise entre 2 et 3 cm, en particulier qui est égale à 2,5 cm, dans laquelle une distance entre l'extrémité de sortie de la cinquième conduite fluidique de sortie de vanne et l'extrémité de sortie de la première conduite fluidique de sortie de vanne se situe de manière optionnelle dans la plage comprise entre 3 et 7 cm, de manière préférée comprise entre 4 et 6 cm, en particulier est égale à 5 cm ; et/ou
v) d'une sixième conduite fluidique de sortie de vanne (58) de l'unité de distribution de boissons présente une distance par rapport à l'axe central de cylindre du cylindre imaginaire qui se situe dans la plage comprise entre 1 et 4 cm, de manière préférée comprise entre 1,5 et 3,5 cm, de manière particulièrement préférée comprise entre 2 et 3 cm, en particulier qui est égale à 2,5 cm, dans laquelle une distance entre l'extrémité de sortie de la sixième conduite fluidique de sortie de vanne et l'extrémité de sortie d'une cinquième conduite fluidique de sortie de vanne se situe de manière optionnelle dans la plage comprise entre 2 et 5 cm, de manière préférée comprise entre 3 et 4 cm, en particulier est égale à 3,5 cm.

14. Machine à café, contenant
i) une unité de distribution de boissons selon l'une quelconque des revendications précédentes, dans laquelle de manière préférée l'extrémité d'entrée de la première conduite fluidique d'entrée de vanne de l'unité de distribution de boissons est reliée à une première conduite de café de la machine à café, et de manière particulièrement préférée une extrémité d'entrée (34) d'une quatrième conduite fluidique d'entrée de vanne (33) de l'unité de distribution de boissons est reliée à une conduite de lait de la machine à café ; et
ii) une unité de commande qui est configurée pour commander au moins une vanne, de manière préférée toutes les vannes, de l'unité de distribution de boissons.

15. Machine à café selon la revendication 14, **caractérisée en ce que** l'unité de commande est configurée pour
i) ouvrir la première vanne (1) lorsque la machine à café a reçu l'ordre de distribuer du café dans un seul récipient à boisson ; et/ou
ii) ouvrir la première vanne (1) et une troisième vanne (20) de l'unité de distribution de boissons lorsque la machine à café a reçu l'ordre de distribuer du café dans un seul récipient à boisson ou dans deux récipients à boisson ; et/ou
iii) commuter, de manière préférée fermer, une deuxième vanne (11) de l'unité de distribution de boissons de manière complémentaire à la première vanne (1) et, de manière optionnelle, également à une troisième (20), quatrième (30), cinquième (40) et/ou sixième vanne (52) de l'unité de distribution de boissons, lorsque la machine à café a reçu l'ordre de distribuer une boisson, et pour ouvrir ladite vanne ou lesdites vannes lorsqu'elle n'a pas reçu d'ordre de distribuer une boisson ; et/ou
iv) ouvrir une quatrième vanne (30) de l'unité de distribution de boissons lorsque la machine à café a reçu l'ordre de distribuer un liquide contenant du lait ou constitué de lait dans un seul récipient à boisson ; et/ou
v) ouvrir une cinquième (40) et une sixième vanne (52) de l'unité de distribution de boissons et fermer une quatrième vanne (30) de l'unité de distribution de boissons lorsque la machine à café a reçu l'ordre de distribuer un liquide contenant du lait ou constitué de lait dans un seul récipient à boisson ou dans deux récipients à boisson.
